Europäisches Patentamt

(19) European Patent Office

Office européen des brevets

(11) Veröffentlichungsnummer: **0 392 340**

**A2**

(12) **EUROPÄISCHE PATENTANMELDUNG**

(21) Anmeldenummer: **90106478.2**

(22) Anmeldetag: **05.04.90**

(51) Int. Cl.5: **B01D 33/01, B30B 9/04**

(30) Priorität: **08.04.89 DE 3911565**
**20.07.89 DE 3924097**
**09.03.90 DE 4007492**

(43) Veröffentlichungstag der Anmeldung:
**17.10.90 Patentblatt 90/42**

(84) Benannte Vertragsstaaten:
**AT BE CH DE DK ES FR GB GR IT LI LU NL SE**

(71) Anmelder: **SCHOTTEN, Alfons**
**An den Eichen 9**
**D-5168 Nideggen-Rath(DE)**

(72) Erfinder: **SCHOTTEN, Alfons**
**An den Eichen 9**
**D-5168 Nideggen-Rath(DE)**

(74) Vertreter: **Liermann, Manfred**
**Josef-Schregel-Strasse 19**
**D-5160 Düren(DE)**

(54) **Pressfilter.**

(57) Die Erfindung betrifft ein Preßfilter mit einem Mantelgehäuse und darin veschiebbar angeordnetem, hydraulisch betätigbarem Preßkolben, einem kegeligen Filterdorn und einem äußeren Filtermantel, wobei Mantelgehäuse, Preßkolben und Filterdorn koaxial zueinander angeordnet sind, Ablaßleitungen für das Filtrat sowie mit einer verschließbaren Öffnung für den Austrag des abgepreßten Filterkuchens, bei dem der Filterdorn stationär und der Filtermantel (7) allein oder zusammen mit einem zylindrischen Führungsrohr (3) axial verschiebbar angeordnet und mit Kraftbetätigungsmitteln (13) verbunden ist und wobei der Filtermantel sich in Richtung des Preßkolbens kegelig verjüngend ausgebildet ist, wobei weiter einerseits der Preßkolben (1) in Preßstellung das Filter schließt und von zugeordneten Kraftbetätigungsmitteln (4) so weit axial zurückgezogen werden kann, daß die Eingangsöffnung des zylindrischen Führungsrohres (3) offen ist und wobei andererseits die Basis des kegeligen Filtermantels (7) den Filter an der Basis des Filterdorns (11) durch Axialverschiebung des Filtermantels (7) verschließen und öffnen kann. Hierbei können Filterdorn oder Filtermantel oder beide auf den einander zugewandten Innenseiten mit Filtermittel (8,12) belegt sein.

Fig. 1

## Preßfilter

Die Erfindung betrifft ein Preßfilter mit einem Mantelgehäuse und darin verschiebbar angeordnetem, hydraulisch betätigbarem Preßkolben, einem inneren nicht zylindrischen Filterdorn und einem äußeren Filtermantel, wobei Mantelgehäuse, Preßkolben und Filterdorn koaxial zueinander angeordnet sind, Ablaßleitungen für das Filtrat sowie mit einer verschließbaren Öffnung für den Austrag des abgepreßten Filterkuchens.

Eine Einrichtung der oben beschriebenen Art ist bereits bekannt geworden durch die europäische Veröffentlichung 0268703 A1. Diese bekannte Einrichtung ist liegend angeordnet und relativ kompliziert in seinem Aufbau. Die Preßkraft, mit der das auszupressende Gut gepreßt werden kann, ist weitgehend abhängig von den geometrischen Verhältnissen des Filters und nicht von der möglichen Kraft eines Preßzylinders der den Preßkolben treibt. Dies liegt daran, daß zwischen Pressenmantel und Preßkolben ein Ringraum frei bleibt, der zylindrisch ausgebildet ist und durch den das gepreßte Gut hindurch nach außen transportiert wird. In diesem zylindrischen Bereich ist ein Auspressen nicht möglich. Irgendeine Preßkraft die vom Preßkolben ausgeübt wird, kann hier nicht mehr auf das auszupressende Gut einwirken. Zwar könnte eine weitere Auspreßkraft bei geschlossenem Filter von dem bei dieser Einrichtung des Standes der Technik vorgesehenen Füllkolben durch entsprechende Kraftausübung durch nachgefülltes Gut ausgeübt werden. Dies bedeutet jedoch, daß der Betätigungszylinder für den Füllkolben gleichzeitig so stark sein muß, daß der Füllkolben als Preßkolben wirken kann. Dies aber ist nicht vorgesehen und würde wohl auch dazu führen, daß dann der Preßkolben von der Kraft des Füllkolbens in seine rückwärtige Lage gedrängt würde. Damit sind also die auf das Preßgut aufzubringenden Preßkräfte durch die geometrischen Verhältnisse dieser Einrichtung begrenzt.

Die Einrichtung nach der genannten europäischen Veröffentlichung weist einen spitzen, langestreckten Preßkegel auf, der mit dem Preßkolben verbunden ist und mit diesem bewegt wird. Hierdurch wird sozusagen ein Preßkeil in das auszupressende Gut hineingepreßt, wodurch Preßkräfte auf das auszupressende Gut ausgeübt werden. Da als Gegenkraft jedoch nicht der Füllkolben benutzt werden kann, muß ein separates ein- und ausfahrbares Gegenlager zusätzlich vorgesehen sein. Dies wird bei der Einrichtung nach der genannten Veröffentlichung dadurch erreicht, daß in den Preßmantel an entsprechender Stelle eine Zwischenwand eingeschoben oder während des Nachfüllvorganges herausgezogen wird. Darüber hinaus ist bei Verwendung eines beweglichen Preßkolbens mit einem daran angeordneten schlanken, spitzen Preßkegel und einem zylindrischen Preßmantel ein schon genannter Ringspalt zwischen Preßkolben und Mantelinnenfläche des zylindrischen Preßmantels erforderlich, in dem keinerlei Preßkräfte auf das Preßgut mehr ausgeübt werden können. Das Preßgut kann damit nicht mit wählbarer Preßkraft ausgepreßt werden. Darüber hinaus ist der schlanke spitz zulaufende Preßkegel keine günstige geometrische Gestalt zum Auspressen des Preßgutes, weil durch einen solchen spitz auslaufenden Preßkegel des Filtrationsverhalten des auszupressenden Gutes nicht ausreichend berücksichtigt werden kann.

Bei der Einrichtung nach der genannten europäischen Veröffentlichung handelt es sich um eine Siebmantelpresse. Das "Filtermedium" ist also ein stabiles Sieb und nicht, wie bei einem Preßfilter, ein Filtergewebe wie z.B. ein Filtertuch oder gar eine semipermeable Membran. Würde der äußere Preßmantel oder der innere Preßkegel mit einem solchen bei Filterpressen üblichen Filtertuch belegt, so würde während der Verschiebung des Preßkolbens die auftretende Reibung des auszupressenden Gutes am Filtertuch dieses zerstören. Die Einrichtung nach dieser europäischen Veröffentlichung ist somit als Preßfilter ungeeignet.

Siebmantelpressen der bekannten und beschriebenen Art werden angewendet zum Auspressen von Rübenschnitzeln. Bei anderen zu entwässernden Stoffen, wie z.B. bei Schlämmen und Suspensionen, erfolgt eine Entwässerung in bekannten Filterpressen. Der Trockenstoffgehalt des Filterergebnisses ist nicht immer befriedigend und ein kontinuierlicher Betrieb ist nicht möglich. Außerdem ist bei Filterpressen ein hoher Personalaufwand erforderlich.

Andere bekannte und kontinuierlich arbeitende Filtereinrichtungen erreichen, auch bei höherem apparativem Aufwand, erheblich schlechtere Trockenstoffergebnisse, so daß eine Nachtrocknung mit anderen Mitteln und/oder anderen Einrichtungen zwingend ist.

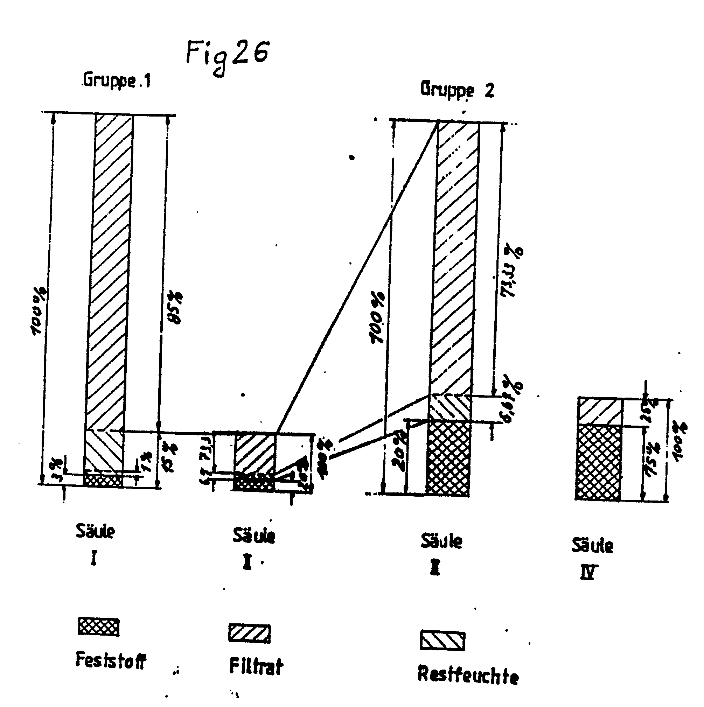

Diese bekannten Filtereinrichtungen erreichen somit nur einen relativ geringen Trockenstoffgehalt. Zum besseren Verständnis sei auf Figur 26 der Anmeldeunterlagen hingewiesen. Dort zeigt die Säule I beispielsweise eine Suspension mit 3% Trockenstoff in der Gesamtmenge von 100%. Zur Entwässerung des größeren Teils der vorhandenen Flüssigkeitsmenge benötigt man eine große Filterfläche, aber nur ein geringes Druckgefälle. In vielen Fällen erreicht man schon über Filtermedien mit natürlichen oder künstlichen Schwerefeldern (Zentrifugen) eine Entwässerung auf ca. 85 - 70% Restfeuchte, also 15 bis 30% Trockenstoff. Hierbei muß darauf hingewiesen werden, daß die Darstellung zur Vereinfachung in Volumenprozent vorgenommen wurde. Die tatsächlichen Berechnungen erfolgen jedoch im allgemeinen in Gewichtsprozenten. Dies bedeutet, daß die Darstellung also nur dann richtig ist, wenn das spezifische Gewicht von Feststoff und Flüssigkeit angenähert gleich ist. Werden bei dem Entwässerungsprozeß 85% des Volumens als Flüssigkeit entnommen, so wird damit das Volumen auf 15% reduziert. Die ursprünglich noch vorhandenen Flüssigkeitsanteile von 97% betragen dann nur noch 12%. Trägt man dies nun in gleicher Weise auf Säule III auf, wobei man das neue Volumen 100% setzt und dann 20% Trockenstoff erhält und entwässert auf 75% Trockenstoff, so reduziert man das Volumen in der Maschine auf ca. 1/4. In Säule IV ist dann zu erkennen, daß 75% Trockenstoff mit 25% Restfeuchte vorliegen. Geht man mit diesem Ergebnis zurück in Säule II, so erkennt man, daß die Gesamtmasse von ursprünglich 100% auf 4% reduziert ist, wobei der Restflüssigkeitsanteil, der ursprünglich 97% betragen hatte, nun nur noch 1% beträgt. Es ist daher durchaus sinnvoll eine Vorentwässerung auf einfachen Maschinen, die nicht für hohe Drücke ausgelegt sind, durchzuführen, wenn sich die Maschine für die Nachentwässerung in den kontinuierlichen Prozeß eingliedern läßt.

Der Erfindung liegt damit die Aufgabe zugrunde, ein Preßfilter vorzuschlagen, mit dem eine Entwässerung von voreingedickten Schlämmen und Suspensionen sowie Schüttgütern unter hohem Druck durchgeführt werden kann, wobei dieses Preßfilter so ausgestaltet sein soll, daß es sich in einen kontinuierlichen Ablauf von vorangehenden kontinuierlich arbeitenden Filtern eingliedern läßt, wobei jedoch gleichzeitig der Aufbau des Preßfilters einfach sein soll.

Ausgehend von einer Einrichtung der eingangs beschriebenen Art ist diese Aufgabe dadurch gelöst, daß der Filterdorn stationär und der Filtermantel allein oder zusammen mit einem zylindrischen Führungsrohr axial verschiebbar angeordnet und mit Kraftbetätigungsmitteln verbunden ist, daß der Filtermantel sich in Richtung des Preßkolbens kegelig verjüngend ausgebildet ist, wobei einerseits der Preßkolben in Preßstellung den Filter schließt und von zugeordneten Kraftbetätigungsmitteln soweit axial zurückgezogen werden kann, daß die Eingangsöffnung des zylindrischen Führungsrohres offen ist und wobei andererseits die Basis des kegeligen Filtermantels den Filter an der Basis des Filterdorns durch Axialverschiebung des Filtermantels verschließen und öffnen kann und daß Filterdorn und/oder Filtermantel auf den einander zugewandten Seiten mit dauerhaftem oder leicht auswechselbarem Filtermittel belegt sind, wobei die jeweilige Ablaßleitung für das Filtrat auf der Rückseite des Filtermittels mündet.

Die beschriebene erfindungsgemäße Einrichtung ist somit relativ einfach im Aufbau und kann wegen des stationären Filterdorns, der kegelig ausgebildet ist und dem beweglichen ebenfalls kegelig ausgebildeten Filtermantel gut mit einem Filtermittel, wie z.B. einem Filtertuch, belegt werden. Der Preßkolben weist keinen kegeligen Filterdorn mehr auf, so daß bei der erfindungsgemäßen Einrichtung der Preßkolben das auszupressende Gut lediglich zusammenpreßt aber nicht in nennenswertem Umfang an den Filterwänden entlang schiebt. Kegeliger Filterdorn und kegeliger Filtermantel stellen zusammen darüber hinaus eine recht gute Anpassung an das Entwässerungsverhalten verschiedener auszupressender Güter dar, so daß ein gutes Auspreßergebnis und damit ein hoher Trockenstoffgehalt mit geringer Restfeuchte erzielt werden kann. Auf der Preßkolbenseite kann eine Einlaßöffnung durch entsprechenden Rückzug des Preßkolbens geöffnet werden und es kann eine entsprechende Auslaßöffnung durch Verschieben des Filtermantels am Fuß des Filterdorns geöffnet oder geschlossen werden. In geöffneter Stellung kann bereits ausgepresstes Gut durch den Nachfüllvorgang ausgeschoben werden. Hierbei erfolgt keine vollständige Entleerung des Innenraumes des Preßfilters, sondern es wird immer nur ein kleiner Bereich des am meisten ausgepreßten Gutes ausgestoßen. Hierdurch wird das Preßfilter in relativ kurzen Zeiten immer wieder für einen Nachfüllvorgang geöffnet, so daß lange Abpreßzeiten, Entleerungszeiten und Reinigungszeiten vermieden werden. Sowohl die Entleerung als auch die Einfüllung können automatisch erfolgen und es bedarf hierzu nur eines Zwischenvorratsbehälters relativ kleiner Abmessung, in den die vorangegangenen Filtereinheiten zur Vorentwässerung kontinuierlich hineinfördern und der in den eben beschriebenen kurzen Zeitabständen immer wieder in das Preßfilter hinein entleert wird. Der kontinuierliche Arbeitsprozeß der vorangehenden Filtereinheiten für die Vorentwässerung wird nicht gestört. Bedienungspersonal für die Entleerung, Reinigung oder Befüllung nach jedem Abpreßvorgang ist nicht erforderlich.

Vorteilhafte Ausgestaltungen der Erfindung werden in den Unteransprüchen 2 bis 38 beschrieben. Abhängig von diesen Ausgestaltungen können mit einem erfindungsgemäßen Preßfilter verschiedene Leistungen und Vorteile erreicht werden. So erlauben verschiedene Gestaltungen des Filterdorns optimale oder angenähert optimale Anpassungen an das Entwässerungsverhalten dem jeweils auszupressenden Gutes. Die Ermittlung der optimalen Kontur des Filterdornes wird weiter unten noch beschrieben. Eine weitere Anpassungsoptimierung an das Entwässerungsverhalten des auszupressenden Gutes kann auch durch eine entsprechende Gestaltung des Filtermantels erreicht werden. Ein verbessertes Auspressen sowie eine verbesserte Anpassung an das Entwässerungsverhalten des Stoffes wird dann erreicht, wenn hinter den Filtermitteln Preßmembranen angeordnet sind, deren Rückseite von einem Druckmittel, wie z.B. Druckwasser, beaufschlagbar ist.

Ein Füllbehälter, stillstehend, mit Rührwerk oder insgesamt drehend, kann integraler Bestandteil des gesamten Preßfilters sein und bei schlecht fließfähigem auszupressendem Gut mit einem Rüttler oder Klopfer ausgerüstet sein.

Das Öffnen und Schließen des Filters ist leicht zu bewirken wenn die Kegelbasis des Zylindermantels einen zylindrischen Ansatz aufweist, der mit einem entsprechenden Sockel dem Filterdorns zusammenarbeitet und sich über diesen Sockel schiebt zum Schließen des Filters. Der Filtermantel kann hierbei gleichzeitig eine Abscherkante aufweisen um während des Filterschließens gleichzeitig das ausgeschobene und ausgepreßte Gut zu durchtrennen.

Selbst die Stirnseite des Preßkolbens kann als Filterfläche benutzt werden. Das hier entstehende Filtrat kann entweder abgesaugt oder aber bei stumpfkegeliger Ausbildung der Stirnseite des Preßkolbens über ein entsprechendes Verbindungsrohr durch die Kegelspitze des Filterkegels nach innen abgeführt werden. Es sind also bei Bedarf recht große Filterflächen erzielbar deren Filtrat problemlos abgeführt werden kann.

Durch radial gerichtete Rippen kann das auszupressende Gut aufgetrennt werden. Da der Abstand zwischen den Rippen in Umfangsrichtung zur Kegelbasis des Filterdorns hin größer wird, läßt sich hierdurch das Ausschieben des ausgepreßten Gutes deutlich erleichtern. Zudem können die Rippen noch mit Filtermittel belegt sein und damit die zur Verfügung stehende Filterfläche vergrößern. Die Rippen selbst können hierbei unterschiedlich aufgebaut sein. Sie können hierbei mit flexiblen Randbögen versehen sein oder auch anstelle von Filterflächen reine Preßflächen bilden. Auch können die Rippen, ausgebildet mit oder ohne Filterflächen, an einer oberen Ringleitung befestigt sein, an der wiederum elastische Dränagekörper befestigt sind, die sich in Längsrichtung frei hängend durch den Filterrinnenraum erstrecken. Diese Dränagekörper bilden zusätzliche Abflußwege für das auszupressende Gut, an denen sich die ausgepreßte Flüssigkeit sammelt und abläuft. Hierbei können auch die Dränagekörper wiederum hohl sein und mit einem Preßmittel beaufschlagbar sein, so daß sie sich unter Druck ausdehnen und damit eine zusätzliche Preßwirkung auf das auszupressende Gut ausüben. Werden sie dann später druckentlastet, läßt sich das ausgepreßte Gut problemlos weiterschieben für den Durchtransport durch das Preßfilter. Es können diese Dränagekörper zusätzlich mit Filtersacken umgeben sein, an denen die ausgepreßte Flüssigkeit hochdochtet, so daß sie am oberen Ende gesammelt werden kann.

Eine besonders vorteilhafte Ausgestaltung dieses Filters mit zusätzlicher Filterfläche wird dadurch erreicht, daß mehrere konzentrisch angeordnete ringförmige Filtertücher mit kegelmantelartigem Zuschnitt eingehangen sind, die die abzupressende Schichtdicke je nach Anzahl der eingehängten Filtertücher auf z.B. 1/8 der ursprünglichen Gesamtschichtdicke reduzieren. Dies verkürzt erheblich die Abpreßzeit, da die Abpreßzeit mit abnehmender Schichtdicke sich erheblich reduziert.

Zur weiteren Vergrößerung der Filterfläche kann auch das zylindrische Führungsrohr auf der Innenseite eine für eine Filtration geeignete poröse Hülse aufweisen. Die Filtratseite dieser Hülse muß dann wieder mit einem Filtratabfluß verbunden sein.

Durch entsprechende Druckbeaufschlagung der jeweils verwendeten Preßmembran in Abstimmung mit der dem Preßkolben zugeteilten Preßkraft kann verhindert werden, daß eine zu große Reaktionskraft auf den projizierten Ring des Filtermantels einwirkt, so daß ein ungewolltes Öffnen des Preßfilters durch die Innendrücke vermieden wird.

Besonders günstig ist es, wenn das gesamte Preßfilter stehend angeordnet ist, so daß die Befüllung von der Schwerkraft unterstützt wird. Filtratablauf und Filterkuchenaustrag wird dann ebenfalls von der Schwerkraft unterstützt.

Ein entfernbarer Amboß unterhalb des Austragspaltes des Filters kann während des Filterkuchenaustrags ein tief nach innen in den Filterraum hineinreichendes Abreißen des Filterkuchens, wodurch nicht ausgepreßter Filterkuchen mitgerissen würde, verhindern.

Die Erfindung soll nun anhand der beigefügten Zeichnungen näher erläutert werden.

Es zeigen:

Figur 1 schematisierter Längsschnitt durch ein Preßfilter kurz nach Preßbeginn

Figur 2 Darstellung wie Figur 1 in fortgeschrittener Preßstellung

Figur 3 Darstellung wie Figur 1 in Preßendstellung und geöffnetem Filtermantel

Figur 4 Darstellung wie Figur 1 jedoch in Einfüllstellung mit zurückgezogenem Preßkolben

Figur 5 Teilansicht in Längsschnitt des Filterdorns mit Filtermantel und Teilen des zylindrischen Führungsrohres mit eingesetzter poröser Hülse als Filtermedium

Figur 5a Ausschnitt des Fußflansches im Bereich der Basis des Filtermantels und des Filterdorns mit Befestigungsanordnung der Preßmembran und des Filtermittels

Figur 6 schematisierter Längsschnitt des Kopfbereichs des Preßfilters mit Füllbehälter und Rührwerk

Figur 6a Ansicht wie Figur 6 jedoch mit drehangetriebenem Füllbehälter

Figur 6b Ansicht wie Figur 6a jedoch mit Füllbehälter als Vorfilter

Figur 6c Draufsicht zu Figur 6b

Figur 7 Filterdorn mit daran angeordneten Rippen

Figur 8 Draufsicht der Figur 7

Figur 9 schematisierter Längsschnitt des unteren Teils dem geöffneten Preßfilters mit Amboßanordnung

Figur 10 schematisierter Längshalbschnitt des unteren Teils des Preßfilters mit geöffnetem Preßmantel einerseits und geschlossenem Preßmantel andererseits und am Filterdorn angeordneten Rippen

Figur 11 Schaltschema für die Druckbeaufschlagung

Figur 12 schematisierter Längsschnitt durch das Filtergehäuse mit eingesetzten Dränagekörpern und unabhängig vom zylindrischen Führungsrohr verschiebbarem Filtermantel

Figur 12a Teilansicht zu Figur 12 aus dem Bereich der Verschiebeverbindung zwischen zylindrischem Führungsrohr und Filtermantel

Figur 13 Draufsicht auf den Einsatz der Dränagekörper

Figur 14 Teilschnitt durch eine Anschlußstelle des Dränagekörpers mit der Ringleitung

Figur 15 Schnitt entlang der Linie A-A nach Figur 14

Figur 16 Ansicht in Richtung des Pfeils B nach Figur 14 jedoch um 90° geschwenkt

Figur 17 Querschnitt durch die Ringleitung im Bereich einer Radialstrebe mit der zugehörigen Radialstrebe in Ansicht

Figur 18 Ansicht in Richtung des Schnitts C-C nach Figur 17

Figur 19 Ansicht in Richtung des Pfeils D nach Figur 17

Figur 20 Querschnitt durch einen Filter mit mehreren kegelmantelartig ausgebildeten Filtertüchern im Preßraum

Figur 21 Querschnitt durch einen Filtertruchhalterung mit eingehängtem Filtertuch

Figur 22 Filtertuchhalteringsegment im Längsschnitt und abgewickelter Darstellung

Figur 23 Draufsicht auf ein Filtertuchhalteringsegment

Figur 24 Kegelmantelabwicklung eines Filtertuchsegments

Figur 25 Teillängsschnitt durch den Preßmantel mit Befestigung von Preßmembran und Filtertuch

Figur 26 grafische Darstellung über Feststoffanteil und Flüssiganteil

Figur 27 Entwässerungskurve

Figur 28 Kegelform sowie Anleitung zur Ermittlung der Kegelform

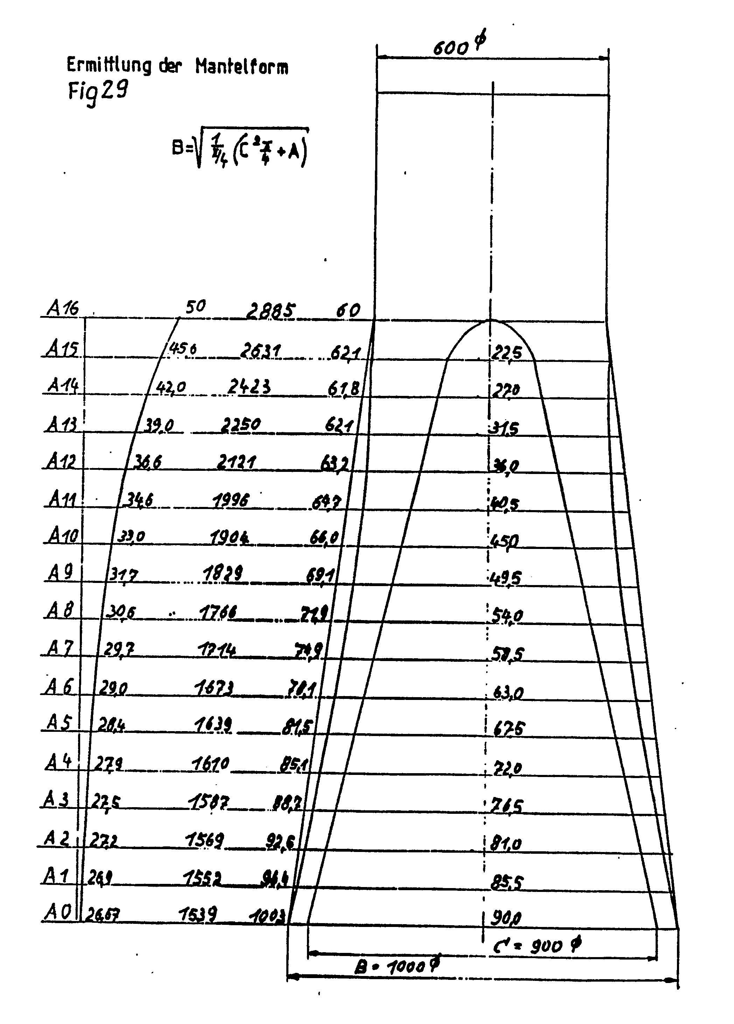

Figur 29 Mantelform sowie Anleitung zur Ermittlung der Mantelform

Es sei nachfolgend zunächst der Aufbau des erfindungsgemäßen Preßfilters in den verschiednen dargestellten Ausführungsformen beschrieben bevor anhand der Bilder 1 bis 4 auf die Ermittlung einer optimierten Kontur des Filterdorns und des Filtermantels eingegangen wird.

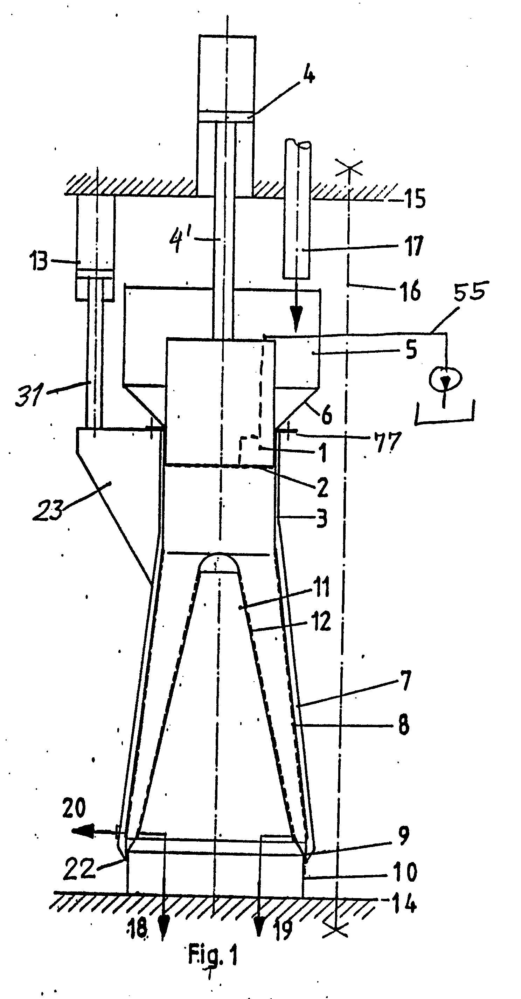

Nach Figur 1 besteht das erfindungsgemäße Preßfilter im wesentlichen aus einem kegelstumpfartig ausgebildeten Filterdorn 11, der mit seiner Basis auf einem zylindrischen Sockel 10 angeordnet ist. Die Kegelstumpfspitze ist abgerundet. Der Filterdorn 11 ist mit Abstand umgeben von einem ebenfalls kegelig verlaufenden Filtermantel 7, dessen Kegelneigung geringer ist als die Kegelneigung des Filterdorns 11 und der im Bereich seines größten Durchmessers einen zylindrischen Ansatz 9 aufweist, der einen entsprechenden zylindrischen Bereich des zylindrischen Sockels 10 dicht schließen kann. An der Unterkante des zylindrischen Teils 9 des Filtermantels 7 ist eine Schneidkante 22 vorgesehen.

Die Kegelhöhe des Filtermantels 7 entspricht etwa der Kegelhöhe des Filterdorns 11, so daß in der Höhe der abgerundeten Spitze des Filterdorns 11 der Kegel des Filtermantels seinen kleinsten Durchmesser aufweist. Dort schließt sich dann ein zylindrisches Führungsrohr 3 an, in dessen obere freie Öffnung ein Preßkolben 1 eingesetzt ist. Der Preß kolben 1 ist über eine Kolbenstange 4' mit einem Hydraulikzylinder 4 verbunden, der sich an einem Oberjoch 15 abstützt.

Das zylindrische Führungsrohr 3 weist an seiner dem kegligen Teil des Filtermantels abgewandten Ende einen Befestigungsflansch 77 auf und es ist an diesem Befestigungsflansch 77 ein Füllbehälter 5 befestigt mit einem konischen Boden 6, der in die obere Eintrittsöffnung des zylindrischen Führungsrohres 3 einmündet. Der Füllbehälter 5 kann über ein Zuführungsrohr 17 befüllt werden.

Vorzugsweise auf der Außenseite im Bereich des zylindrischen Führungsrohres, bei Bedarf aber auch sich über den konischen Teil des Filtermantels erstreckend, ist mindestens ein sich radial erstreckender Steg 23 vorgesehen, der über eine Kolbenstange 31 mit einem Hydraulikzylinder 13 verbunden ist, der sich seinerseits ebenfalls am Oberjoch 15 abstützt. Die beschriebene Anordnung ist in Umfangsrichtung vorzugsweise dreimal in gleichmäßiger Verteilung vorhanden.

Im Ausführungsbeispiel nach Figur 1 sind die sich gegenüber liegenden Innenflächen des Filtermantels 7 und dem Filterdorns 11 mit einem Filtermittel 8 bzw. 12 belegt. Die Stirnseite 60 des Kolbens 1 ist ebenfalls mit einem Filtermittel 2 belegt. Das hinter den genannten Filtermitteln anfallende Filtrat kann durch Abflußleitungen, die von den Pfeilen 18, 19 und 20 symbolisiert werden, abgeführt werden. Das am Filtermittel 2 anfallende Filtrat kann über eine Filtratabsaugleitung 55 abgesaugt werden.

Dem Oberjoch 15 mit genügend Platz für das Preßfilter im Abstand gegenüberliegend ist ein Unterjoch 14 vorgesehen. Oberjoch 15 und Unterjoch 14 sind über mehrere Zuganker 16 miteinander verbunden, so daß über das Oberjoch 13, den Zugankern 16 und das Unterjoch 14 ein Kräftekurzschluß bezüglich der durch das Preßfilter hervorgerufenen Reaktionskräfte erzeugt wird.

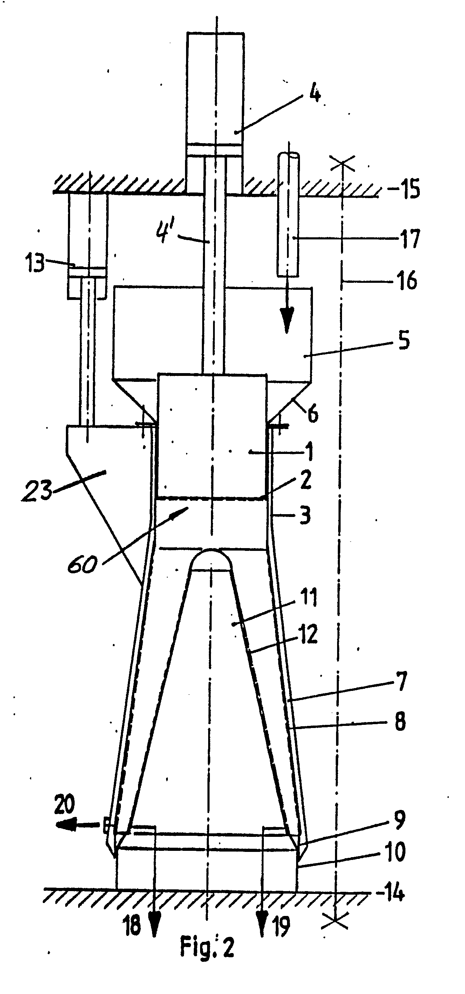

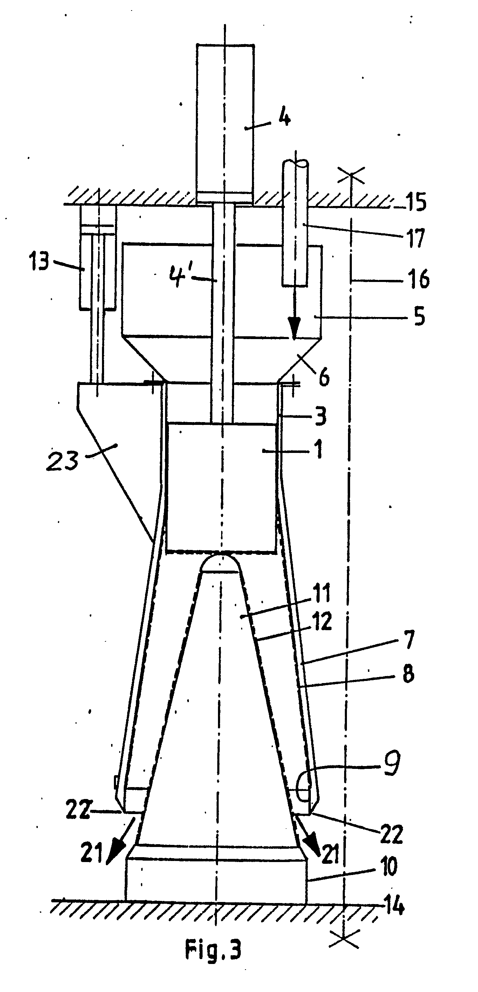

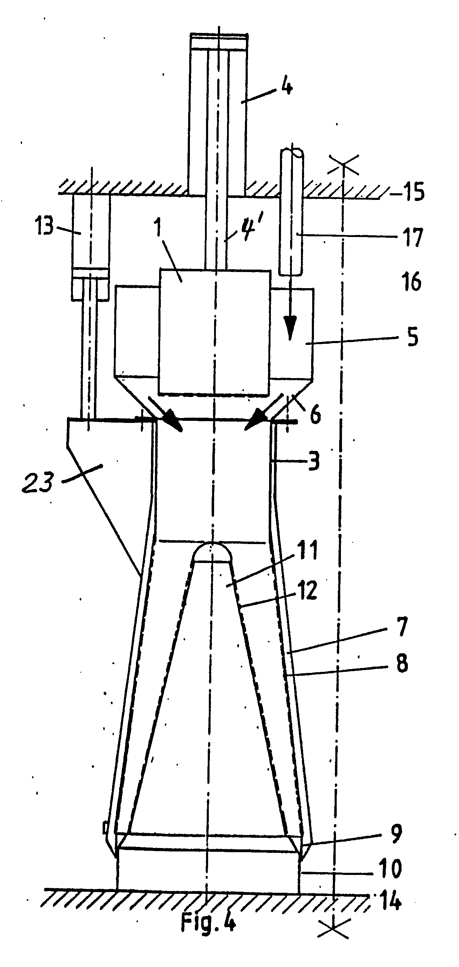

In der Figur 1 ist der Preßkolben 1 nach Befüllung des Innenraumes des Preßfilters bereits eine kleine Wegstrecke in das zylindrische Führungsrohr 3 eingefahren und hat damit das auszupressende Gut bereits etwas zusammengepreßt. Die Darstellung nach Figur 2 entspricht der Darstellung nach Figur 1. Es ist hier jedoch der Preßkolben 1 bereits ein weiteres Stück in Preßrichtung vorgefahren. Dies setzt sich solange fort, bis der Preßkolben 1 seine in Figur 3 dargestellte Endlage erreicht hat. In Figur 3 ist durch Betätigung der Hydraulikzylinder 13 der Filtermantel 7 angehoben, so daß Austrittsöffnungen 21 für den Austritt des ausgepreßten Gutes frei werden. Ein einfaches Öffnen in der Darstellung nach Figur 3 mit dem Preßkolben 1 in Endlage wird jedoch in der Regel für den Austritt des ausgepreßten Gutes nicht ausreichen. Je nach Innendruck muß hierzu entweder bereits in der Stellung des Preßkolbens 1 nach Figur 2 der Filtermantel 7, so wie in Figur 3 dargestellt, angehoben werden, so daß der weitere Weg des Preßkolbens 1 gleichzeitig auch das ausgepreßte Gut ausschiebt oder es muß nach Abschluß eines erneuten Füllvorganges mit Preßbeginn zunächst der Filtermantel 7 angehoben werden um das ausgepreßte Gut auszuschieben und sodann erneut geschlossen werden um einen Auspreßvorgang einzuleiten. Figur 4 zeigt hierzu das erfindungsgemäße Preßfilter in Einfüllstellung. Hierzu ist der Preßkolben 1 vollständig zurückgezogen, so daß die obere Eintrittsöffnung des zylindrischen Führungsrohres 3 frei wird und aus dem Füllbehälter 5 nachgefüllt werden kann.

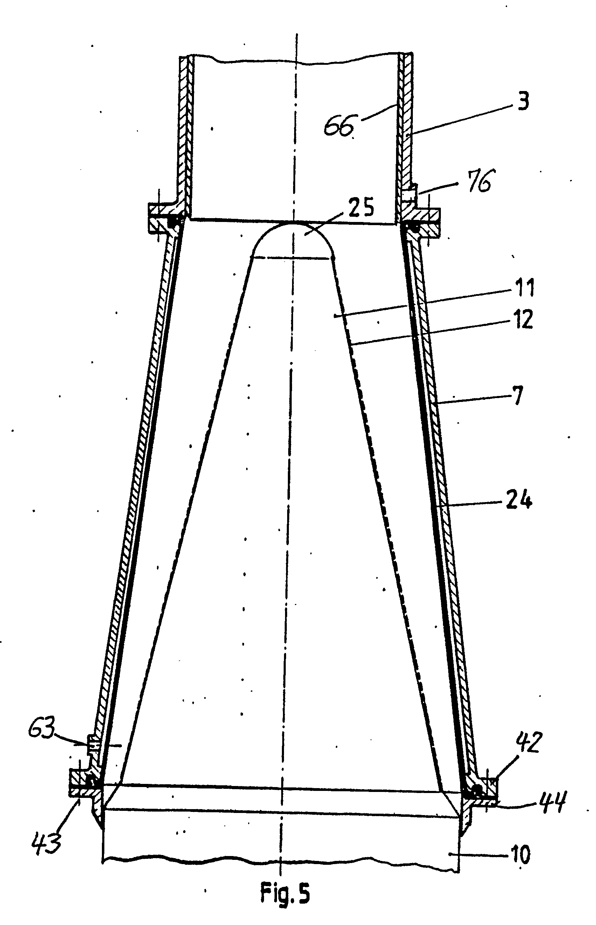

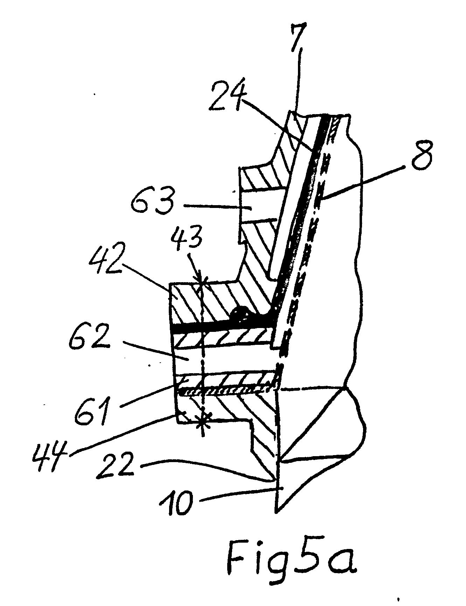

Figur 5 zeigt einen Längsschnitt durch den unteren Bereich des Preßfilters. Bei dieser Ausführungsform weist das zylindrische Führungsrohr 3 innen eine eingesetzte poröse Hüle 66 auf, die in diesem Bereich als Filtermedium dient. Die Filtratseite kann über einen Filtratabfluß 76 verfügen.

Im Gegensatz zum Filterdorn 11, der mit einem Filtermittel 12 belegt ist, weist die Innenseite des Filtermantels 7 lediglich eine Membran 24 auf, die über einen Druckmittelanschluß 63 im Filtermantel 7 auf ihrer Rückseite mit Druckmittel, z.B. mit Preßwasser, beaufschlagbar ist. Diese Preßmembran 24 ist im notwendigen Umfang elastisch und preßt daher das auszupressende Gut gegen den Filterdorn 11 und damit gegen das dort angeordnete Filtermedium 12, so daß auf der Rückseite des Filtermediums 12 das ausgepreßte Filtrat ablaufen kann. Es ist aber auch möglich, zusätzlich die Membran 24 noch mit Filtermittel zu belegen. Eine solche Anordnung, die auch die Befestigung der Preßmembran einerseits und des Filtermittels andererseits erkennen läßt, zeigt der Ausschnitt in Figur 5a. Der Filtermantel 7 weist an seiner Basis einen Befestigungsflansch 42 auf, der über Ankerschrauben 43 mit dem Befestigungsflansch 44 der Scherkante 22 verbunden ist. Zwischen beiden befindet sich jedoch ein ringförmiges Zwischenstück 61, das mindestens eine radial gerichtete durchgehende Abflußöffnung 62 aufweist.

In der dargestellten Anordnung ist die Membran 24 zwischen dem Befestigungsflansch 42 und dem Zwischenstück 61, und das Filtermittel 8 zwischen dem Zwischenstück 61 und dem Befestigungsflansch 44 eingeklemmt. Über den Druckmittelanschluß 63 im Filtermantel 7 kann nunmehr die Rückseite der Membran 24 mit Druckmittel beaufschlagt werden. Das vor der Membran 24 angeordnete Filtermittel 8 ist ausreichend elastisch, um der Preßbewegung der Membran 24 zu folgen. Zwischen der Membranvorderseite und der Filtermittelrückseite entsteht nun ein Filtratabflußraum, so daß dort das ausgepreßte Filtrat abfließen und durch die Abflußöffnung 62 das Preßfilter verlassen kann.

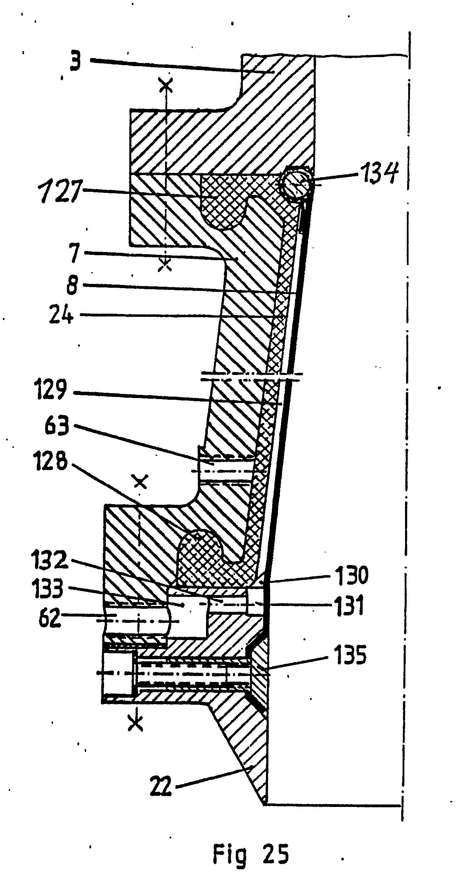

Figur 25 zeigt eine Variation der Figur 5a. Die Membran 24 ist im Preßmantel 7 oben und unten über Spannwulste 127 und 128 eingeklemmt. Die Filtratseite ist mit längsverlaufenden Rillen 129 versehen, in denen das Filtrat nach unten abläuft. Unten bildet die Membran einen Ringkanal 130. Das Filtrat mündet dann in eine Vielzahl von kurzen Längskanälen 131 und über deren Querbohrungen 132 in den Ringkanal 133 und kann dann über den Anschluß 62 abgeführt werden. Das Filtertuch 8 ist oben mit einem Stahlring 134 vernäht und unten in einer Nut mit Klemmsegmenten 135 verspannt.

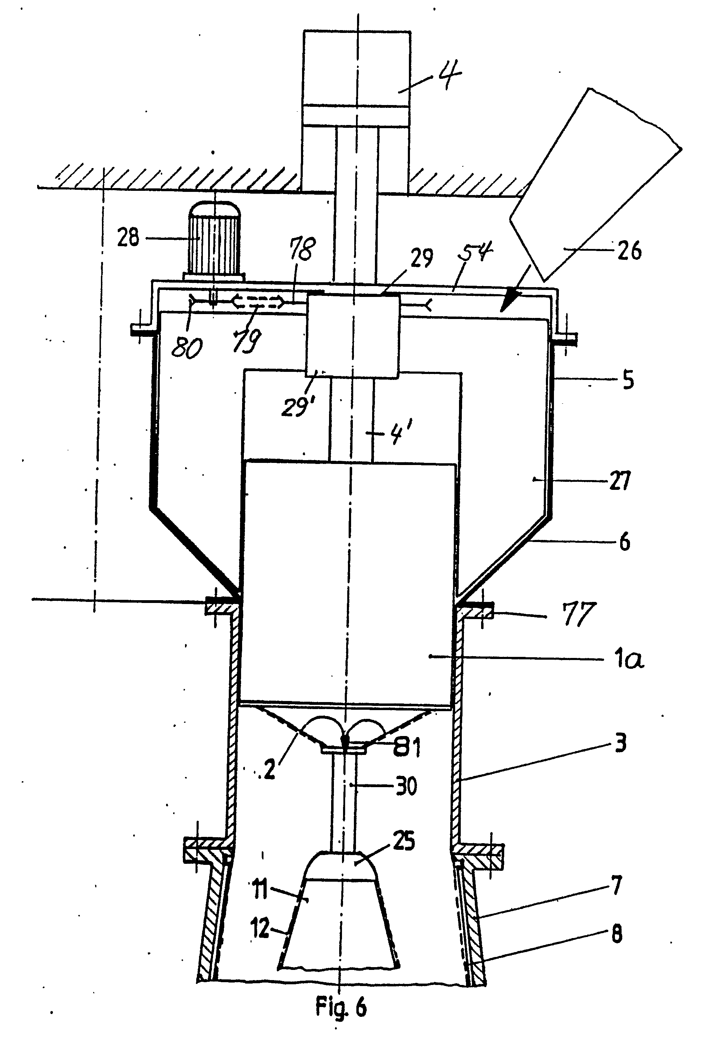

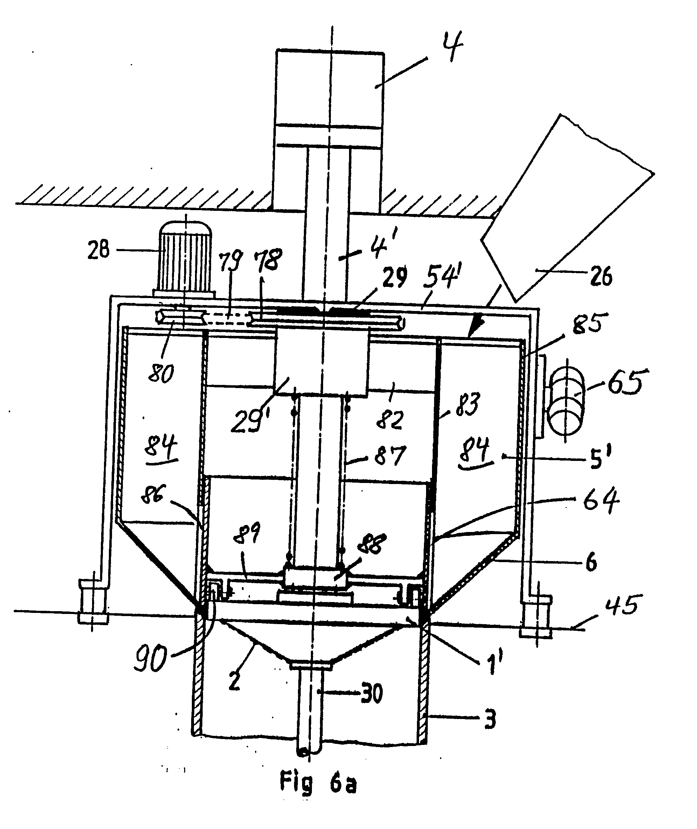

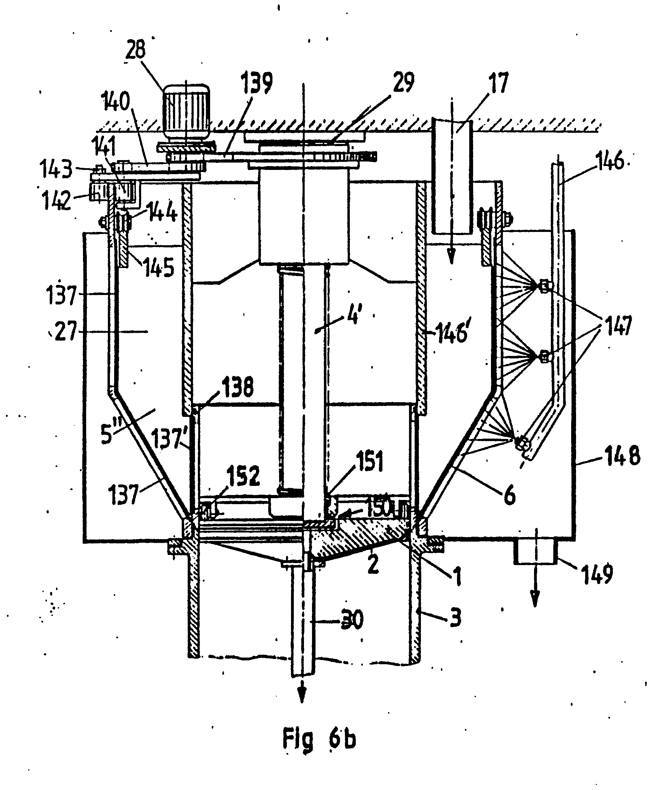

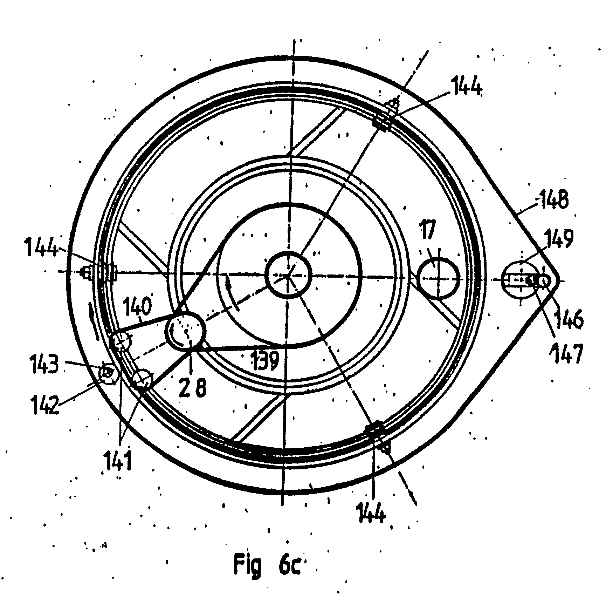

Figur 6 zeigt eine weitere Variante des Preßfilters. Dargestellt ist im Längsschnitt der obere Bereich des Filtermantels 7 mit dem sich anschließenden zylindrischen Führungsrohr 3. An der Oberseite des zylindrischen Führungsrohrs 3 ist in der bereits beschriebenen Weise am Befestigungsflansch 77 ein Füllbehälter 5 angeordnet, dessen konischer Boden in der oberen Öffnung des zylindrischen Führungsrohrs 3 mündet. Auf seiner Oberseite ist der Füllbehälter 5 von einem Deckel 54, der auch als Traverse ausgebildet sein kann, abgedeckt, der eine zentrale Durchgangsöffnung für die Kolbenstange 4' aufweist und ein nach innen gerichtetes Halslager 29 trägt, auf dem drehantreibbar eine Nabe 29' angeordnet ist, die ihrerseits Rührblätter 27 trägt. Die Nabe 29' kann weiter drehfest mit einer Keilriemenscheibe 78 verbunden sein, die über einen Keilriemen 79 mit einer weiteren Keilriemenscheibe 80 eines Antriebsmotors 28 verbunden ist. Der Antriebsmotor 28 kann hierbei am Deckel oder der Traverse 34 angeordnet sein. Es können auch andere geeignete Antriebseinrichtungen oder Kraftübertragungsmittel verwendet werden.

Der Deckel 54 weist ebenfalls eine nicht näher dargestellte und bezeichnete Einfüllöffnung auf, durch die das aus der Schüttrinne 26 austretende Gut in den Fullbehälter 5 eingefüllt werden kann.

Mit dem Motor 28 können die Rührblätter 27 in Drehung versetzt werden, wodurch das im Füllbehälter 3 befindliche Gut gewünschtenfalls durchgemischt werden kann. Außerdem wird durch diese Drehbewegung der Eintrag des Gutes in das zylindrische Führungsrohr 3 und damit in das Filterinnere bei zurückgezogenem Preßkolben 1a unterstützt.

Der Preßkolben 1a ist an seiner Stirnseite stumpfkegelig mit in das Innere des Preßfilters hineinzeigender Kegelspitze ausgebildet und wiederum in diesem Kegelbereich mit Filtermittel 2 belegt. Im Bereich der Kegelspitze setzt sich der Kegel fort mit einem Abflußrohr 30, das dichtend und verschiebbar durch die Spitze 25 des Filterdorns hindurch in das Innere dieses Filterdorns geführt ist, von wo aus das durch das Abflußrohr 30 abgeführte Filtrat weitergeführt wird. Das Abflußrohr 30 ist somit mit der Rückseite des Filtermittels 2 verbunden, so daß das Filtrat in Richtung der Pfeile 81 in das Abflußrohr 30 eintreten kann.

Figur 6a zeigt einen ähnlichen Ausschnitt-Längsschnitt wie Figur 6. Auch hier ist wieder das zylindrische Führungsrohr 3 zu erkennen, das nunmehr allerdings an seinem oberen Ende keinen Befestigungsflansch mehr aufweist. Bei der Ausführungsform nach Figur 6a ist der Füllbehälter 5' in seiner Gesamtheit drehbar und drehantreibbar ausgebildet. Hierzu ist zunächst ein den gesamten Füllbehälter umfassender Deckel 54', der ebenfalls als Traverse ausgebildet sein kann, vorgesehen, der elastisch an einer Zwischenstrebe 45 befestigt und abgestützt ist. Der Deckel 54' bzw. die Traverse weist wieder eine zentrale Durchgangsbohrung auf, durch die die Kolbenstange 4' des Hydraulikzylinders 4 hindurchgeführt ist. Die zentrale Bohrung ist wiederum umfaßt von einem Halslager 29, auf dem wiederum die bereits beschriebene Lagernabe 29' drehbar gelagert ist. Die Lagernabe 29' kann wiederum eine Riemenscheibe 78 aufweisen, die über einen Keilriemen 79 mit der Keilriemenscheibe 80 eines Motors 28 verbunden ist.

An der Nabe 29' sind sich radial erstreckend mindestens zwei Querstege 82 in sich gegenüberliegender Anordnung befestigt, die ein zylindrisches Rohr 83 tragen, das auf der Außenseite wiederum mindestens 2 weitere Querstege 84 trägt. Diese Querstege 84 sind wieder umfaßt von einem zylindrischen Rohr 85, das über einen konischen Boden 6 zur Einfüllöffnung des zylindrischen Führungsrohrs 3 hin verjüngt ist. Im Bereich der Einfüllöffnung des zylindrischen Führungsrohrs 3 besteht jedoch keine Verbindung zwischen dem konischen Boden 6 und der Stirnseite des zylindrischen Führungsrohrs 3, so daß sich der konische Boden 6 mit dem zugehörigen zylindrischen Rohr 85 ebenso wie das innere zylindrische Rohr 83 angetrieben vom Motor 28 über die Nabe 29' drehen kann.

Im Inneren des zylindrischen Rohres 83 befindet sich ein zentrales Führungsrohr 64, das in seiner in Figur 6a dargestellten unteren Stellung Einlaßöffnungen 86 im zylindrischen Rohr 83 verschließt. Eine die Kolbenstange 4' mit Spiel umgebende Hülse 88 weist in sich gegenüberliegender Anordnung mindestens zwei Querstege 89 auf, die etwa in ihrem radial äußeren Bereich Auflagerollen 90 aufweisen. Zwischen der Nabe 29' und der Hülse 88 ist eine als Spiraldruckfeder 87 ausgebildete Feder vorgesehen, die die Kolbenstange 4' umgibt. Diese Feder 87 drückt die Hülse 88 und damit die Querstege 89 immer nach unten. Die Querstege 89·sind ihrerseits an ihren radial äußeren Enden mit der Innenseite des zentralen Füllrohrs 64 verbunden, so daß auch das Füllrohr 64 von der Feder 87 nach unten gedruckt wird und damit in normaler Lage die Einlaßöffnungen 86 verschließt. Diese normale Lage oder Endlage ist erreicht, wenn die untere Stirnseite des zentralen Füllrohres 64 am konischen Boden 6 anliegt.

Auch in dieser Ausführungsform weist das erfindungsgemäße Preßfilter einen Preßkolben 1' auf, der jedoch nunmehr in seiner Höhe sehr flach ausgebildet ist, aber dennoch auf seiner dem Filterinnenraum zugewandten Stirnseite in der bereits beschriebenen Weise stumpfkegelig ausgebildet und mit Filtermittel 2 belegt ist. Als Filtratabflußleitung dient wiederum das bereits beschriebene Abflußrohr 30. Auch hier ist der Preßkolben 1' mit der Kolbenstange 4' des Hydraulikzylinders 4 verbunden. Wird der Kolben 1', um den Einfüllvorgang einzuleiten, über die Kolbenstange 4' vom Hydraulikzylinder 4 betätigt, zurückgezogen, so kommt die Rückseite des Preßkolbens 1' in oberer Lage zur Anlage an den Auflagerollen 90 und hebt bei weiterer Hubbewegung diese und damit auch das zentrale Füllrohr 64 an, so daß nunmehr die Einlaßöffnungen 86 geöffnet werden. In dieser Stellung kann dann der Filterinnenraum nachgefüllt werden. In umgekehrter Bewegungsrichtung sorgt dann die Feder 87 wieder für einen sicheren Verschluß der Einlaßöffnungen 86.

Der Deckel 54' weist in seitlicher Anordnung einen schräg angestellten Rüttler 65 auf, der ein Anhaften des eingefüllten und auszupresssenden Gutes verhindern und ein Abfließen in den Innenraum des Preßfilters unterstützen soll. Hierbei hat sich die dargestellte und beschriebene schräge Anordnung dieses Rüttlers 65 als besonders vorteilhaft erwiesen. Die Rüttelimpulse des Rüttlers 65 können hierbei über das Halslager 29 und die Nabe 29' im Ausführungsbeispiel nach der Figur 6a auf den drehangetriebenen Füllbehälter 5' übertragen werden.

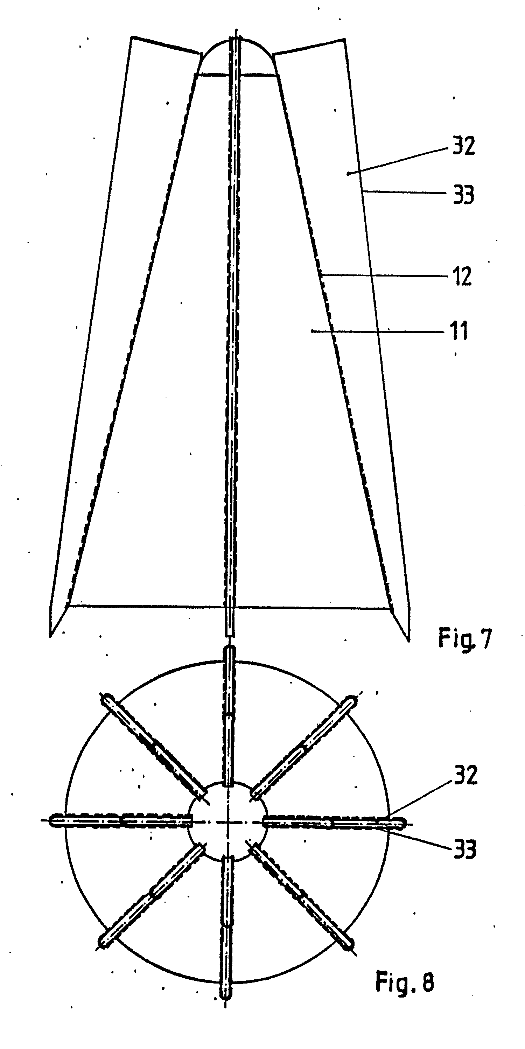

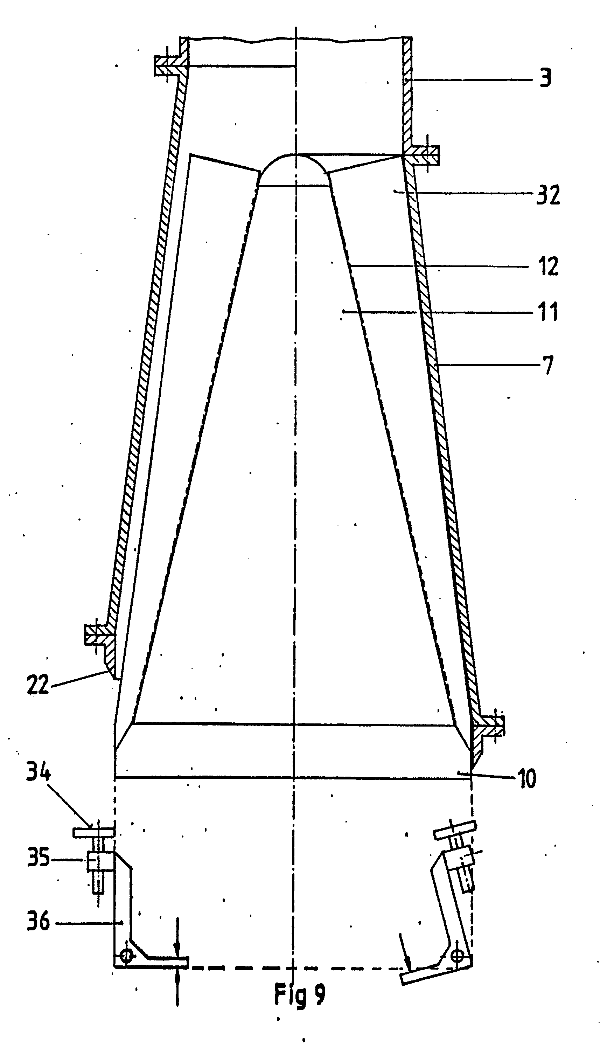

In den Figuren 7 und 8 ist in Alleinstellung der Filterdorn 11 dargestellt, der wiederum mit Filtermittel 12 belegt ist und sich in Längsrichtung mit radialer Ausdehnung erstreckend Rippen 32 aufweist, die im Ausführungsbeispiel nach den Figuren 7 und 8 ebenfalls mit Filtermittel 33 belegt sind. Eine wesentliche Funktion der Rippen 32 ist die Auftrennung des im Innenraum des Preßfilters befindlichen Preßgutes in Segmente. Wenn diese Rippen nicht vorhanden sind, kann das gepreßte Gut insbesondere im schon vollständig ausgepreßten unteren Bereich einen festen geschlossenen Mantel bilden, der nur schwer auszustoßen ist, da er hierzu aufgesprengt werden müßte, weil er ja während des Ausschiebens auf kegelige Bereiche des Filterdorns mit größer werdendem Durchmesser trifft. Die Dehnung und schließlich die Aufsprengung des ausgepreßten Filtergutes behindert stark das Ausschieben. Wenn das ausgepreßte Filtergut jedoch durch die Rippen 32 in Segmente unterteilt ist, liegt ein geschlossener Mantel des ausgepreßten Gutes nicht vor und es kann das ausgepreßte Gut mühelos ausgeschoben werden. Hierbei ist nun besonders vorteilhaft, daß sich die Stegwände in Ausschieberichtung vom auszuschiebenden und ausgepreßten Gut lösen und erweitern. Hierdurch entfällt gleichzeitig eine für das Filtermittel 33 nachteilige Reibung zwischen ausgepreßtem Filtergut und Filtermittel. Dieser vorteilhafte Effekt wird natürlich auch dann erzielt, wenn die Rippen 32 nicht mit Filtermittel belegt sind sondern einfach nur der Aufteilung des auszupressenden Gutes dienen. Sie bilden dann mit ihren Wänden gleichzeitig zusätzliche Dränagekanäle für den Abfluß der ausgepreßten Flüssigkeit.

Die Rippen 32 können aber auch, ob mit Filtermittel belegt oder nicht, elastisch ausgebildet sein, so daß sie von innen mit Druckmedium, wie z.B. Preßwasser, beaufschlagbar sind. Sie können dann dazu dienen, das auszupressende Gut zusätzlich zu pressen.

In der Figur 9 ist der Filterdorn mit angesetzten Rippen 32 bei geschlossenem Filtermantel 7 (rechte Hälfte) und bei geöffnetem Filtermantel 7 (linke Hälfte) dargestellt. In der geschlossenen Stellung liegt die radial äußere Kante jeder Rippe 32 an der Innenseite des Filtermantels 7 an.

Unterhalb der Austrittsöffnungen des Preßfilters bei geöffnetem Filtermantel 7 ist in kreisringförmiger Anordnung ein Anschlagamboß 34 vorgesehen, der aus Kreisringsegmenten zusammengesetzt ist. Jeder als Kreisringsegment ausgebildete Anschlagamboß 34 ist über eine Stellschraube 35 höhenverstellbar an einem Schwenkhebel 36 angeordnet und kann durch entsprechende Betätigung des Schwenkhebels 36 in die Arbeitsstellung (linke Hälfte Figur 9) oder in die Ruhestellung (rechte Hälfte der Figur 9) geschwenkt werden. Das auszuschiebende Preßgut gleitet dann bei geöffnetem Filtermantel abwärts bis zur Auflage auf einem Anschlagamboß 34 und kommt dann zur Ruhe. In dieser Lage wird der Filtermantel 7 wieder zugefahren, so daß die Scherkante 22 das ausgeschobene und ausgepreßte Gut abtrennen kann. Ein unerwünscht weit im Inneren des Preßfilters erfolgender Abriß des auszupressenden Gutes, was zur Folge hätte, daß noch nicht ganz ausgepresstes Gut den Preßfilter verläßt, wird hierdurch verhindert. Nach dem Abscheren kann durch eine entsprechende Schwenkbewegung mit dem Schwenkhebel 36 das abgetrennte und ausgepreßte Gut abgeworfen werden.

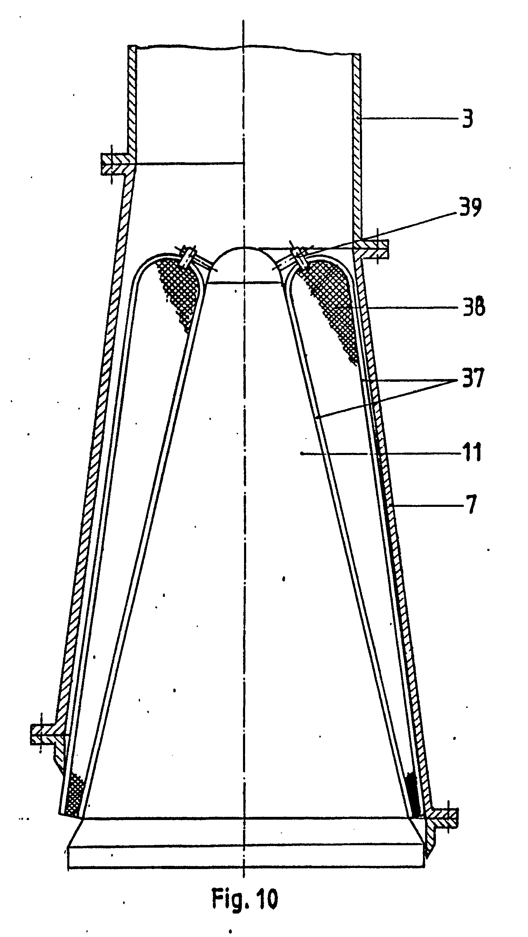

Figur 10 zeigt eine ähnliche Anordnung wie Figur 9. Dort werden jedoch die Stege 32 von Filtersäcken 38 gebildet, die über Schenkelfedern 37 aufgespannt werden. Die Schenkelfedern 37 sind über Halter 39 am oberen Ende des Filterdornes befestigt. Auch hier wird wieder die Auftrennung des auszupressenden Gutes erreicht und gleichzeitig zusätzliche Filterfläche geschaffen. Auch in diesem Fall können die Filtersäcke 38 unterlegt sein beispielsweise von einer schlauchförmigen, geschlossenen Abpreßmembran, mit der die Filtersäcke 38 bei Zufuhr von Preßmittel entsprechend aufgebläht werden können und damit wiederum das Gut auspressen. Der Filtratablauf kann hierbei beispielsweise mit dem Filtratablauf des Filtermittels des Filterdornes 11 zusammengefaßt sein. Hierbei geschieht eine Übertragung des Filtrates dadurch, daß aufgrund der Federspannung der Schenkelfedern 37 die Außenkanten der übergestülpten Filtersäcke innen gegen das Filtermittel 12 des Filterdorns 11 und außen gegen die Innenseite des Filtermittels 8 am Filtermantel 7 anliegen. An diesen Anlageflächen erfolgt die Weiterleitung des Querfiltrates aus den Filtersäcken in die Dränageflächen von Filtermantel und Filterdorn. Beim Anheben des Filtermantels 7, also beim Öffnen des Filters, bleibt die Schenkelfeder unter Spannung und spannt das Filtergewebe in den Trennflächen des im Filter befindlichen Filterkuchens, so daß der Kuchen an diesen Seitenflächen frei wird und sich nicht im Gewebe des Filtermittels verklammern kann.

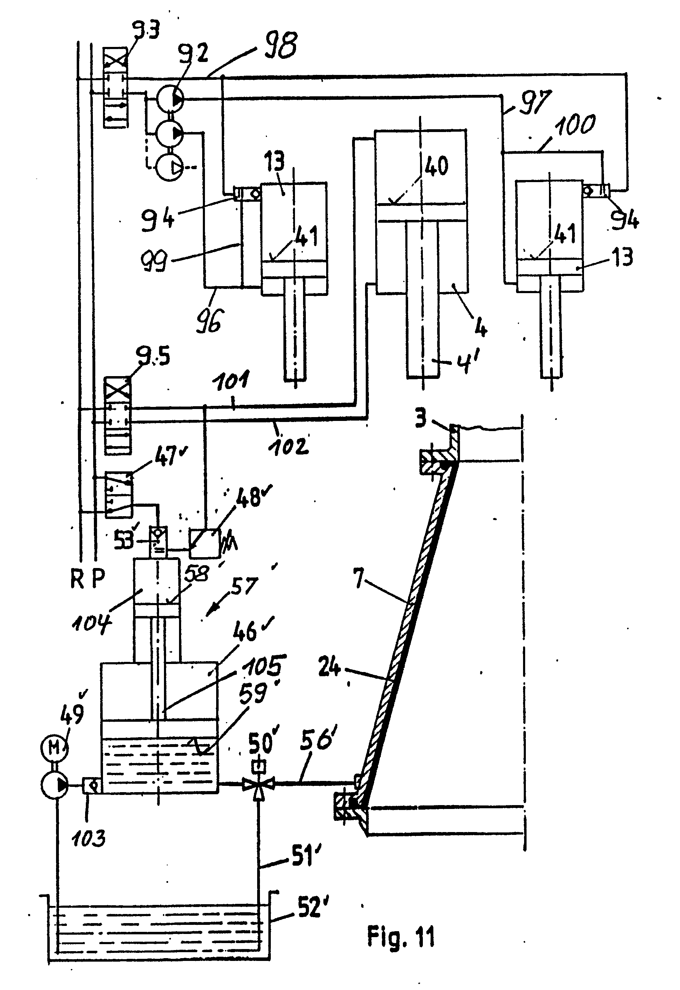

Figur 11 zeigt ein Beispiel einer hydraulischen Steuerung des erfindungsgemäßen Preßfilters. Dargestellt sind hier der Hydraulikzylinder 4, mit dem ein Preßkolben 1, 1', 1a betätigt werden kann sowie Hydraulikzylinder 13, mit denen der Filtermantel 7 bewegt wird.

Die genannten Hydraulikzylinder werden versorgt von einer Druckleitung P und entleeren sich in eine Rücklaufleitung R. Der Hydraulikzylinder 4 kann hierbei über ein Mehrwegeventil 95 vor- und zurückbewegt und in der Mittelstellung dieses Mehrwegeventils 95 in beliebiger Lage blockiert werden. Die blockierte Stellung des Hydraulikzylinders 4 wird bis auf den Verschiebeweg des Kolbens infolge von Leckverlusten beibehalten. Die Hydraulikzylinder 13 werden gesteuert von einem Mehrwegeventil 93, das in seinem Aufbau dem Mehrwegeventil 95 entspricht. Soweit mehrere Hydraulikzylinder 13 an einem Preßfilter vorhanden sind zur Bewegung des Filtermantels 7 ist es erforderlich, daß diese im präzisen Gleichlauf bewegt werden, um ein Verkanten vermeiden. Hierzu ist der kolbenstangenseitige Ausgang jedes Hydraulikzylinders 13 jeweils über eine Leitung 96 bzw. 97 mit einem Mengenteiler 92 verbunden, der seinerseits vom genannten Mehrwegeventil 93 mit Druckmittel versorgt wird oder es sorgt das Mehrwegeventil 93 dafür, daß das durch den Mengenteiler 92 rückströmende Druckmedium in die Rücklaufleitung R zurückgeführt wird. In jedem Fall aber wird von dem Mengenteiler 92 die zuströmende oder rückströmende Menge in gleiche Ströme geteilt, so daß jedem Hydraulikzylinder 13 eine gleiche Menge Hydrauliköl zugemessen wird (für den Einfahrhub) oder das aus jedem Hydraulikzylinder 13 eine präzise gleiche Menge Hydrauliköl ausgeschoben wird (für den Schließhub des Filtermantels 7), wodurch jeweils die Bewegungsgeschwindigkeit der Kolben und Kolbenstangen der Hydraulikzylinderstangen untereinander gleich ist. Um die Kolben und damit die Kolbenstangen der Hydraulikzylinder 13 in Richtung der Schließbewegung des Filtermantels 7 auszufahren, werden die Hydraulikzylinder über eine Leitung 98, die entsprechend verzweigt ist, mit Druckmittel beaufschlagt bei entsprechender Schaltstellung des Mehrwegeventils 93. Das Druckmittel strömt hierbei durch in dieser Strömungsrichtung frei öffnende entsperrbare Rückschlagventile 94. Das auf der anderen Kolbenseite der Hydraulikzylinder 13 ausströmende Öl wird nun in seiner Ausströmmenge von dem Mengenteiler 92 gleich gehalten. In umgekehrter Richtung können sich die Kolben der Hydraulikzylinder 13 aufgrund von außen einwirkender Kräfte nicht bewegen, weil eine Einfahrbewegung dieser Kolben von den Rückschlagventilen 94 verhindert wird, weil durch diese Rückschlagventile 94 das in den Hydraulikzylindern befindliche Öl gesperrt wird. Wird jedoch das Mehrwegeventil 93 entsprechend umgeschaltet, so führt der Mengenteiler 92 über die Leitungen 96 und 97 der kolbenstangenseitigen Seite der Kolben der Hydraulikzylinder 13 Drucköl zu und es wird der in den Leitungen 96 und 97 sich aufbauende Druck über Entsperrleitungen 99 und 100 auch in die entsperrbaren Rückschlagventil 94 geleitet, die daraufhin öffnen, so daß die Kolbenstangen und Kolben der Hydraulikzylinder 13 einfahren können.

Der Hydraulikzylinder 4 für den Preßkolben wird über die Leitungen 101 bzw. 102 eingefahren oder ausgefahren. Bei der Ausfahrbewegung wird das im Preßfilter vorhandene Preßgut gepreßt. Die Bewegung wird gesteuert durch eine entsprechende Schaltstellung des Mehrwegeventils 95.

Zur Beaufschlagung der Rückseite der Preßmembran 24 mit Druckmittel ist ein Druckübersetzer 57 vorgesehen mit einem Niederdruckteil 46, von dem aus die Rückseite der Membran 24 über das Mehrwegeventil 50 und die Druckleitung 56 mit Preßwasser versorgt wird. Bei Entlastung schaltet das Ventil 50 um und leitet das Preßwasser über die Leitung 56 durch das Ventil 50 und die Falleitung 51 zurück In den Preßwasserbehälter 52. Zur Versorgung des Niederdruckteils 46 mit Preßwasser ist eine Wasserpumpe 49 vorgesehen, die durch das Rückschlagventil 103 Wasser in den Niederdruckteil 46 pumpt und damit den dort befindlichen Kolben nach oben treibt. In dieser Situation ist das Ventil 50 geschlossen, so daß Preßwasser nicht abströmen kann. Auf dem Niederdruckteil 46 des Druckübersetzers 57 kann als Hochdruckteil 104 ein normaler Hydraulikzylinder vorgesehen sein. Solche Druckübersetzer sind im Handel - mindestens auf Bestellung- erhältlich. Der nicht näher bezeichnete Kolben dieses Hydraulikzylinders 104 und der nicht näher bezeichnete Kolben des Niederdruckteils 46 sind über eine Kolbenstange 105 starr miteinander verbunden. Der Hydraulikzylinder 104 weist auf seiner der Kolbenstange 105 abgewandten Seite ein entsperrbares Rückschlagventil 53 auf. Vor dem Rückschlagventil 53 in Richtung des Hydraulikzylinders 104 mündet eine von der Leitung 101 abgezweigte, nicht näher bezeichnete Druckleitung, die über ein Vorspannventil 48 mit dem entsperrbaren Rückschlagventil 53 verbunden ist. Das Vorspannventil 48 ist so eingestellt, daß es das entsperrbare Rückschlagventil 53 erst entsperrt, wenn in der Leitung 101 ein bestimmter, am Vorspannventil 48 eingestellter Druck überschritten wird. Befindet sich nun das Ventil 47 in der bezüglich der Darstellung in Figur 11 anderen Schaltstellung so wird der Hydraulikzylinder 104 auf der der Kolbenstange 105 abgewandten Seite mit dem Druck der Druckleitung P beaufschlagt. Das Verhältnis der Kolbenfläche 58 des Hydraulikzylinders 104 zur Kolbenfläche 59 des Niederdruckteils 46 muß so gewählt werden, daß sich ein gewünschter Druck auf der Rückseite der Preßmembran 24 erreichen läßt. Wird nämlich die der Kolbenstange 105 abgewandte Seite des Hydraulikzylinders 104 mit Druckmedium beaufschlagt, so wird die hierdurch an der Kolbenfläche 58 erzeugte Kraft über die Kolbenstange 105 auf den Kolben mit der Kolbenfläche 59 übertragen. Diese Kraft wird an der Kolbenfläche 59 über das Preßmedium (z.B. Wasser) wieder umgewandelt in Druck und es wird dieses Preßmedium bei entsprechender Schaltstellung des Ventils 50 über die Druckleitung 56 hinter die Preßmembran 24 geführt. Das Rückschlagventil 103 verhindert ein Rückfließen in den Preßwasserbehälter.

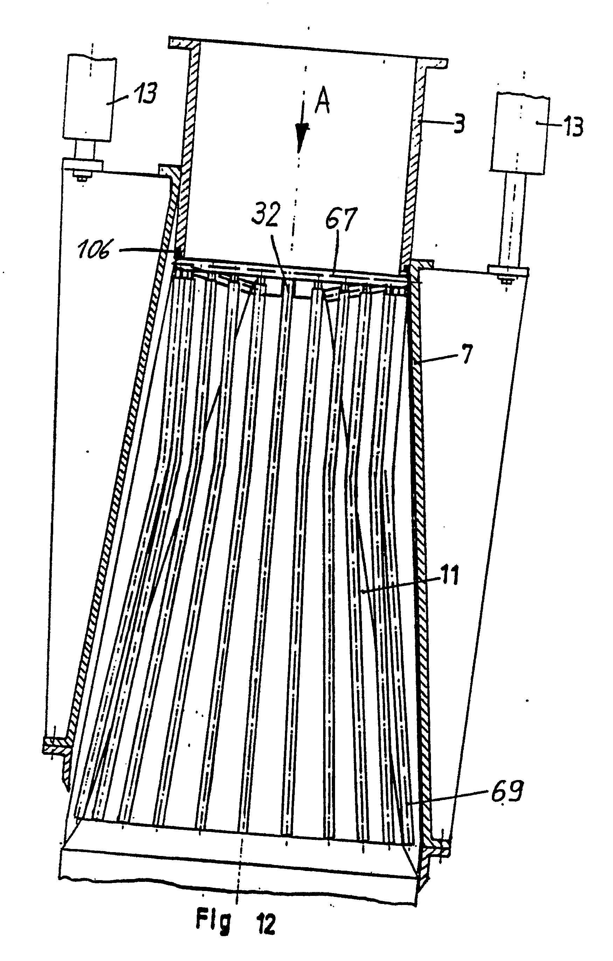

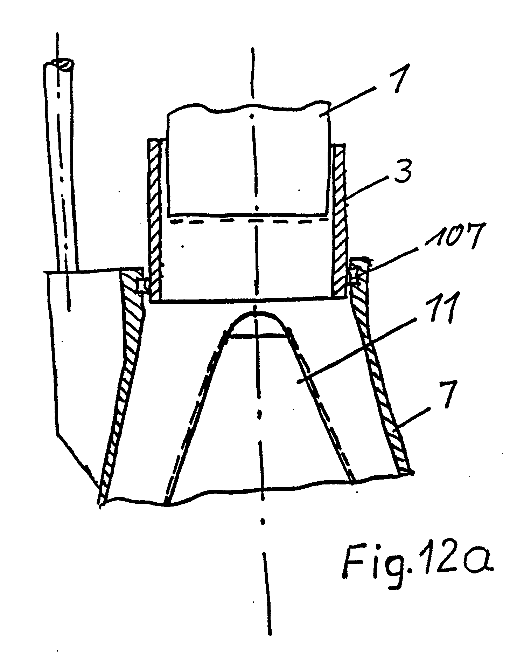

Figur 12 zeigt einen Längsschnitt durch den unteren Bereich des erfindungsgemäßen Preßfilters. In der Ausführungsform nach Figur 12 ist das zylindrische Führungsrohr 3 und der Filtermantel 7 nicht mehr einstückig sondern getrennt und unabhängig voneinander ausgebildet. Es bleibt hier das zylindrische Führungsrohr 3 ortsfest, während der Filtermantel 7 von den Hydraulikzylindern 13 in der bereits beschriebenen Weise bewegt werden kann. Eine Dichtung 106 sorgt hierbei dafür, daß in der geschlossenen Stellung des Filtermantels 7 (rechte Hälfte der Figur 12) die notwendige Abdichtung zwischen Filtermantel 7 und stationärem zylindrischem Führungsrohr 3 erreicht wird. Die Figur 12a zeigt hierzu eine Variante. Die Ausbildung nach Figur 12a unterscheidet sich von der nach Figur 12 lediglich dadurch, daß die dort verwendete Dichtung 107 nicht stationär am zylindrischen Führungsrohr 3 sondern vielmehr am Filtermantel 7 angeordnet ist und sich daher mit dem Filtermantel 7 mitbewegt.

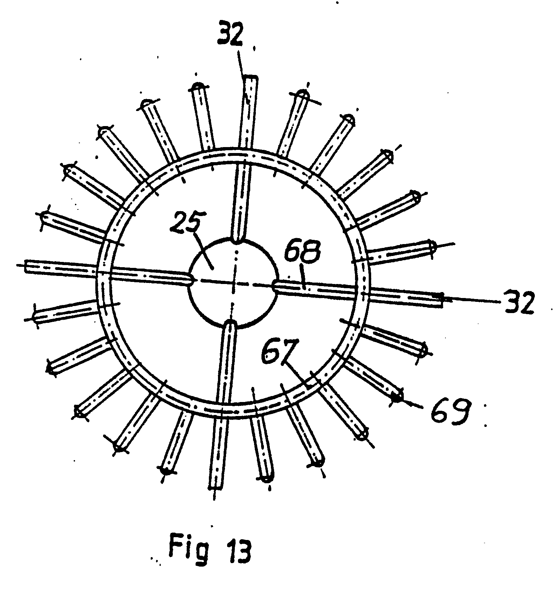

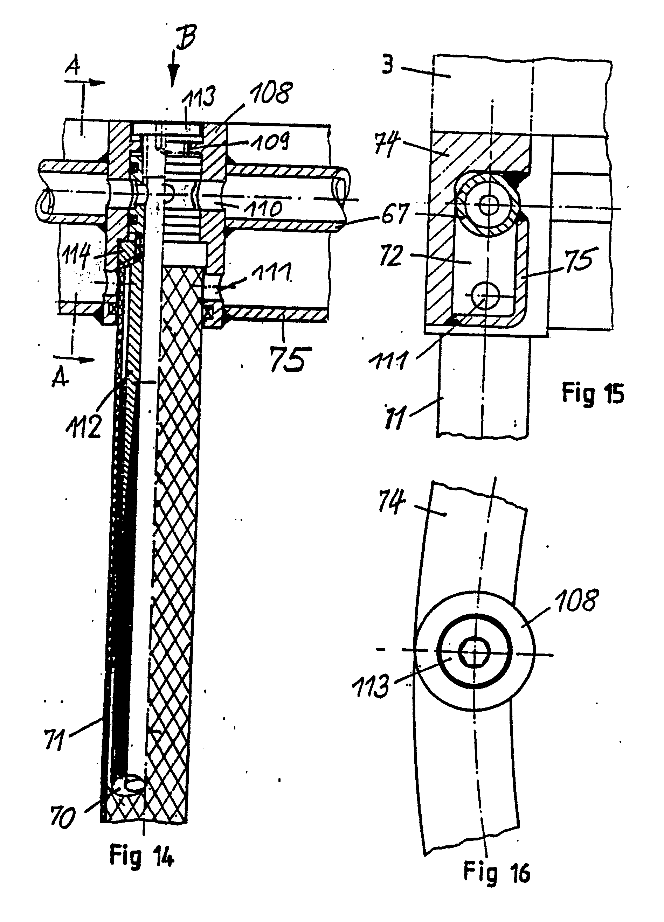

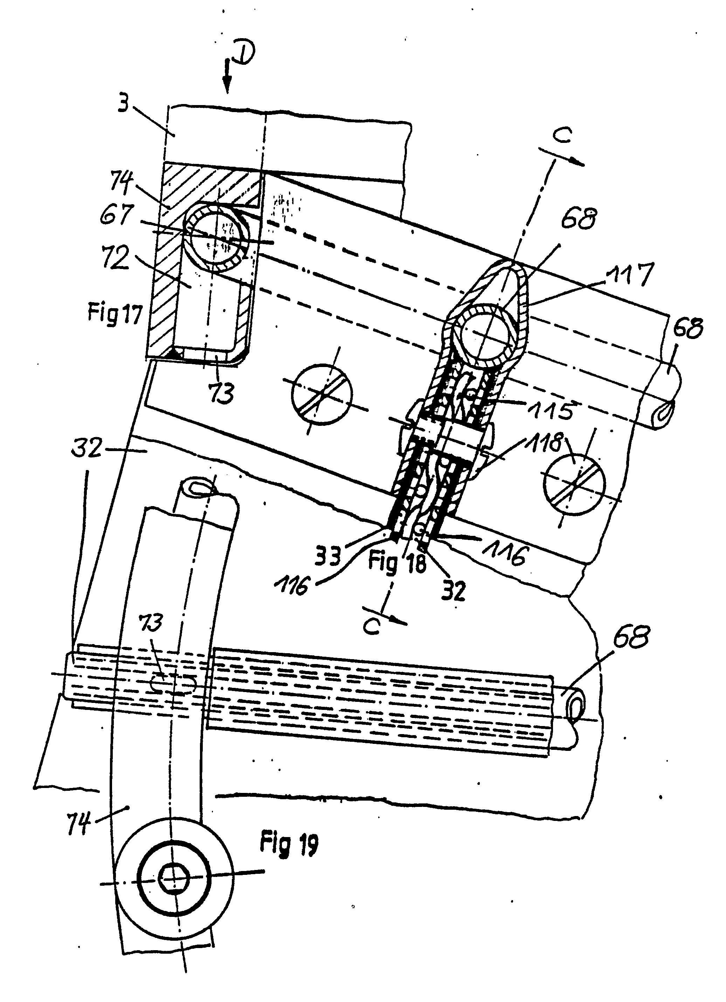

Wie in Figur 12 zu erkennen, ist in dieser Ausführungsform ein Einsatz verwendet, der in Figur 13 aus einer Ansicht in Richtung des Pfeils A nach Figur 12 dargestellt ist und im wesentlichen besteht aus einem Tragring 67, der über Radialstreben 68 an der Spitze 25 des Filterdorns 11 befestigt ist. Am Tragring wiederum sind in Umfangsrichtung gleichmäßig verteilt, elastische frei herunterhängende Dränagekörper 69 vorgesehen, die sich bis zur Basis des Filterdorns 11 erstrecken können. Solche Dränagekörper 69 erzeugen im Preßgut zusätzliche Dränageleitungen und fördern damit den Auspreßvorgang. Hierdurch wird ein besseres Auspressen und damit ein höherer Trockenstoffanteil erreicht. Dieser Effekt kann weiter verbessert werden, wenn die Dränagekörper 69 als elastische Schläuche ausgebildet werden, die über Druckmedium mit Druck beaufschlagbar sind, so daß sie über das Druckmedium ausdehnbar sind. Hierdurch wird der Preßvorgang zusätzlich unterstützt. Eine weitere Verbesserung wird dadurch erreicht, daß die Dränagekörper 69 als Schläuche 70 ausgebildet sind, die mit Filtersäcken 71 umgeben sind. Der in diesem Fall notwendige Aufbau des Einsatzes ist in einem Ausführungsbeispiel in den Figuren 14 bis 19 dargestellt.

Es ist in diesem Fall erforderlich, daß der Tragring 67 als Rohrleitung ausgebildet ist. Diese Rohrleitung 67 ist umfaßt von zwei Winkelstücken 74 und 75, deren Anordnung besonders deutlich in Figur 15 erkennbar ist. Durch diese Anordnung der Winkelstücke 74 und 75 wird zur Rohrleitung 67 ein weiterer Ringkanal 72 gebildet. Es sind in diesem Fall auch die Radialstreben 68 rohrförmig ausgeführt, so daß über den Innenraum des Filterdorns 9 und über die radial gerichteten Rohrleitungen 68 Preßmittel in das ringförmig verlaufende Rohr 67 eingeführt werden kann. An allen Stellen, an denen an die Rohrleitung 67 Schläuche 70 angeschlossen werden sollen, weist die Rohrleitung 67 einen Einsatz 108 auf (Figur 14). Diese Nabe 108 weist eine nicht näher bezeichnete Bohrung mit einem innenliegenden Kragen 109 auf. Im unteren Bereich ist diese nicht näher bezeichnete innen liegende Bohrung absatzartig erweitert. Zwei Querbohrungen 110 und 111 sind einerseits mit der Rohrleitung 67 und andererseits mit dem Ringkanal 72 verbunden. Ein Preßschlauch 70 ist an einem Ende in an sich bekannter Weise mit einem Steckrohr 112 verbunden, das in die Bohrung des Einsatzes 108 eingesteckt ist und oberhalb und unterhalb der Querbohrung 110 gegen die Bohrungswand des Einsatzes 108 abdichtet. Am freien stirnseitigen Ende weist das Steckrohr 112 ein Innengewinde auf, in welches ein Verschlußstopfen 113 mit einem entsprechenden Kragen eingedreht ist, so daß dann, wenn der Verschlußstopfen fest angedreht ist, die Stirnseite des Steckrohres 112 gegen den Kragen 109 gezogen ist.

Unterhalb der unteren Dichtung des Steckrohres 112 weist dieses eine Ringnut auf, in welche das obere Ende des jeweiligen Filtersackes 71 eingelegt ist. Ein zweiteiliger Ring 114 kann sich nun in diesem Bereich um den Filtersack 71 legen, so daß bei entsprechendem axialem Anzug des Preßschlauches 70 durch den Verschlußstopfen 113 der Filtersack 71 dort eingeklemmt und damit festgehalten wird. Über die Querbohrungen 110 durch die Rohrleitung 77 hindurch, kann nunmehr der Preßschlauch 70 innen mit Druckmittel beaufschlagt werden, so daß er sich ausdehnt und den Preßvorgang unterstützt. Die am Preßgut austretende Flüssigkeit dochtet nun am Filtersack 71 hoch und es kann die hochdochtende Flüssigkeit durch die Querbohrung 111 in den Ringkanal 72 abfließen.

Wie bereits beschrieben, ist die als Ring ausgeführte Rohrleitung 67 mit den als Rohren ausgebildeten Radialstreben 68 verbunden, über die im notwendigen Umfang das Druckmittel zugeführt wird. Im Ausführungsbeispiel sind die Rohre 68 etwa unter 15o geneigt. An diesen Querrohren 68 können jeweils auch Rippen 32 befestigt sein. Zur Bildung dieser Rippen 32 ist unterhalb jedes Rohres 68 ein Drahtgewebe 115 angeordnet, welches beidseitig mit einem Lochblech 116 belegt ist. Diese Lochbleche sind an den Radialstreben 68 oder an den auch als Rohr ausgebildeten Radialstreben 68 angeschweißt. Diese Lochbleche 116 mit dem Drahtgewebe 115 bilden eine Rippe 32, die nun auf ihren Außenseiten mit dem Filtermittel 33 belegt wird. Diese Filtermittel 33 werden im oberen Bereich über ein Bügelblech 117 und über Hülsenschrauben 118 verklemmt. Um den Widerstand für das durchzuschiebende zu pressende Gut zu vermindern, ist das Bügelblech nach oben spitz zulaufend ausgebildet, wie dies der Figur 18 entnommen werden kann.

Der Ringkanal 72 hat an den Stellen, an denen die Rippen 32 vorgesehen sind, jeweils eine Filtratabflußöffnung 73, die genau in dem Bereich des Drahtgewebes 115 zwischen den Lochblechen 116 mündet, so daß das aus der Filtratablfußöffnung 73 austretende Filtrat mit dem Filtrat, das an den Rippen 32 entsteht, gemeinsam abfiießen kann.

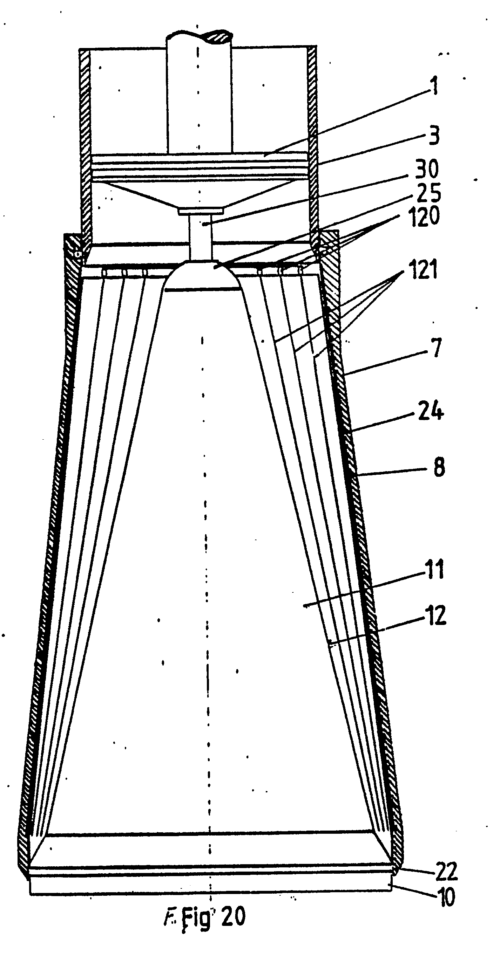

Figur 20 zeigt einen Querschnitt durch den Preßraum mit dem ortsfesten Führungsrohr 3, dem Preßkolben 1a, dem Filterdorn 11, dem Filtermantel 7 mit der Preßmembran 24, die nur angedeutet ist, sowie mit im Preßraum liegenden kegelmantelartigen Filtertüchern 121, 122, die an Filtertuchhalteringen 119 aufgehängt sind, wobei diese Halteringe 119 aus Ringsegmenten bestehen, die auf den Rippen 32 aufliegen. Bei dem Ausstoßvorgang ist der Preßmantel 8, wie beschrieben, angehoben. Das im Führungsrohr 3 befindliche, restliche Preßgut wird nun durch den Preßkolben 1 durch die Spalte zwischen den Filtertuchhalteringen 119, die radial durch die Rippen 32 unterbrochen sind, hindurchgepreßt, wodurch das Preßgut ringmäßig mit entsprechender Ringdicke verteilt wird. Das nachschiebende Preßgut schiebt das bereits vor- bzw. abgepreßte Preßgut weiter nach unten in die Austragsöffnung. Die Reibung zwischen dem Preßgut und den Filtertüchern kann dabei sehr gering gehalten werden, zum einen durch die geometrische Form des Filtertuches, zum anderen durch die Werkstoffauswahl. Es ist z.B. bei Filterpressen üblich, über dem normalen, multifilen Filtergewebe zum leichteren Kuchenabfall ein meist monofiles feines Gewebe aus Polyamid oder ähnlich glatten Werkstoffen anzuordnen, die zudem von der Produktseite noch kalandriert sein können.

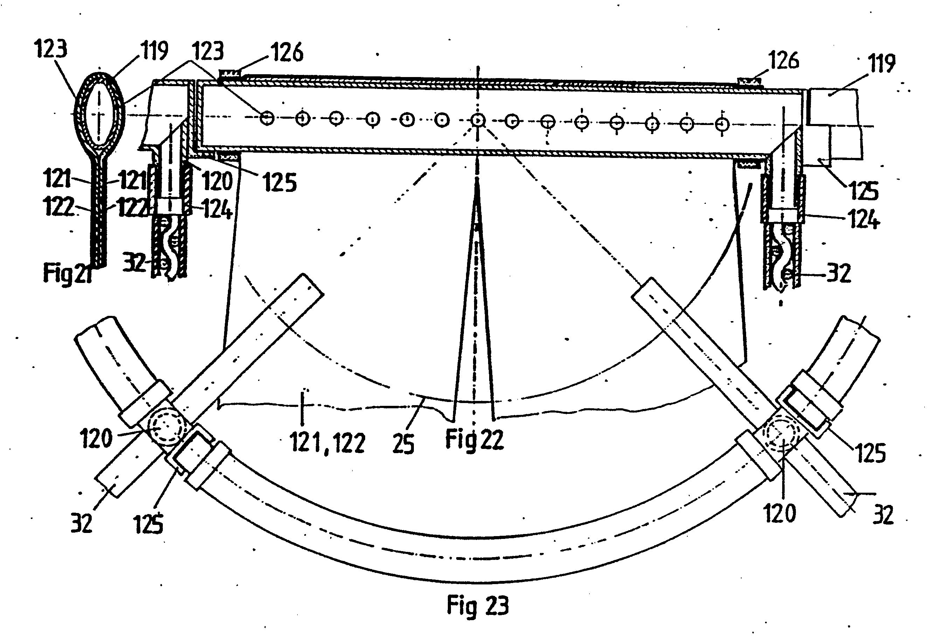

Eine ähnliche Ausführung ist hier anzuwenden, wie z.B. aus Figur 21 hervorgeht. Um den Filtertuchhaltering 119 ist zunächst das multifile Filtertuch 122 angeordnet und darüber das glatte monofile Filtertuch 121 angeordnet. Der als Tragrohr ausgebildete Filtertuchhaltering 119 ist zweckmäßigerweise aus einem handelsüblichen Rohr mit ovalem Profil, welches mit Ablaufbohrungen 123 versehen ist, hergestellt. Der Filtertuchhaltering 119 kann aus Ringsegmenten von etwa 90° oder 60°, wie aus Figur 22 und 23 hervorgeht, gebildet sein und ist an einem Ende mit einem Filtratablaufstutzen 120 versehen, mit dem das Ringsegment in einen Ablaufstutzen 124 eingesteckt wird, der auf der Rippe 32 angeordnet ist. Bei dieser Ausführungsform braucht die Rippe 32 nicht mit Filtermittel belegt zu sein. An der anderen Seite wird das Ringsegment in eine Halbschale 125 eingelegt, welche an der Stutzenseite des Gegenrohres angeordnet ist.

Die Filtertücher sind oben zu einer Schlaufe vernäht und mit dieser über den Filtertuchhaltering 119 geschoben. Am Ende dieser Schlaufe kann das Tuch durch einen Gummiring 126 abgedichtet werden.

In Figur 23 erkennt man ein Ringsegment des Filtertuchhalteringes 119 mit dem Ablaufstutzen 120 und einer Halbschale 125.

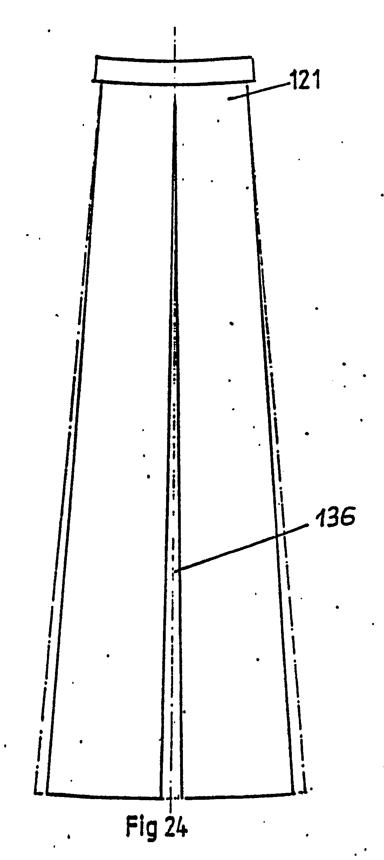

Figur 24 zeigt ein Filtertuchsegment abgewikkelt in Ansicht. Strichpunktiert ist die geometrische Abwicklung dargestellt. Oben ist die umgenähte Aufhängeschlaufe. Damit beim Durchschub des Preßgutes die Reibung an den Tuchkanten verringert wird, sind diese nach unten zu konisch gegenüber der geometrischen Form zugeschnitten. Zusätzlich können die Tücher noch mit einem oder mehreren konischen Einschnitten 136 versehen werden.

Es sei nun nachfolgend und abschließend noch auf Bestimmungsmöglichkeiten zur Bestimmung der Kontur des Filtermantels und des Filterdorns und auf die Auslegung der Querschnittsabmessungen eingegangen. Zunächst wird ein Preßkolben 1 durch den Hydraulikzylinder 4 bei vollständig gefülltem Innenraum des Preßfilters in Preßrichtung verschoben und verdichtet und entwässert über das Filtermittel 2 das Preßgut im Führungsrohr 3. Durch die Druckfortpflanzung wird auch das Preßgut im weiteren Innenraum des Preßfilters verdichtet und entwässert. Durch die Verdichtung und Entwässerung des Preßgutes an den Kegelflächen des Filtermantels 7 und des Filterdorns 11 entstehen Reib-und Scherbewegungen, die die Entwässerung wesentlich begünstigen. Da diese Reibungen jedoch auch Rückstellkräfte bilden, wird eine Druckfortpflanzung bis in die Spitze zwischen Filterdorn 11 und Kegelmantel 7 nicht erfolgen.

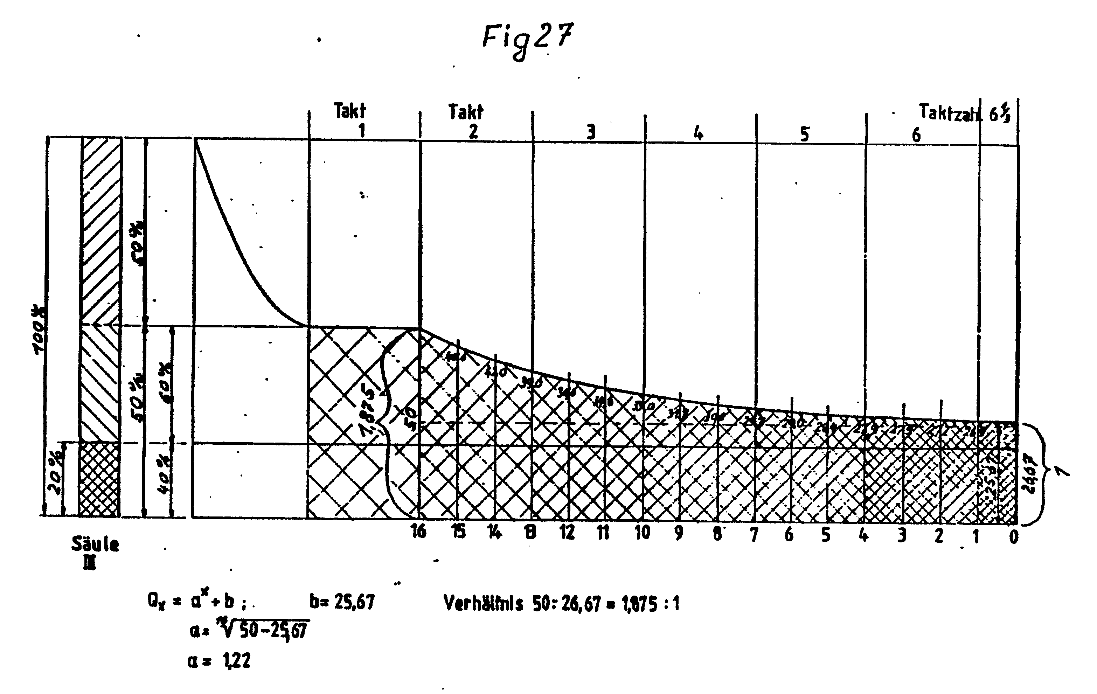

Es sei nun Fig. 26 und Fig. 27 betrachtet. Gemäß Fig. 26 Säule III, wird das vorentwässerte Preßgut mit dem entsprechenden Volumen in das Preßfilter gefüllt und dann beispielsweise durch Kolben 1 so verdichtet, daß das Volumen halbiert wird. Hier wird Flüssigkeit vorwiegend am Filtermittel 2 ausgeschieden. Damit beträgt das Verhältnis von Trok-

kenstoffgehalt zu Restfeuchte nach dem halben Preßweg des Kolbens 1 noch 40 : 60. Der Verlauf der Filtrationskurve im zylindrischen Führungsrohr 3 ist für die weitere Betrachtung unerheblich. Allerdings ist zu empfehlen, daß die Hydraulikpumpe, mit der der Hydraulikzylinder 4 betrieben wird, eine Regelpumpe ist, die sich dem Entwässerungsverhalten des Preßgutes anpaßt. Nach Durchführung der genannten Preßkolbenbewegung sind damit in der halben Säule III nach Bild 1 noch 20% Trokkenstoff und 30% Feuchtigkeit vorhanden. Diese Feuchtigkeit kann auf 6,67 % reduziert werden. Dann beträgt das Massenverhältnis von Restfeuchte zu Trockenstoff 50 : 26,67, d.h. angenähert 2 : 1. Dies bedeutet, daß der Querschnitt des Führungsrohrs 3 doppelt so groß sein muß wie der Flächenquerschnitt des Öffnungsspaltes, an dem das ausgepreßte Preßgut ausgeschoben wird. Der Verlauf dieser Querschnittsflächenverringerung muß dem Entwässerungsverhalten des Preßgutes angepaßt werden. Die Entwässerungskurve eines Preßgutes verläuft nach einer Exponentialfunktion, die von Produkt zu Produkt unterschiedlich sein kann. Das Filtrationsverhalten kann mit der Beziehung $Q_x = a^x + b$ beschrieben werden, wobei $Q_x$ die örtlich entstehende Filtratmenge bezeichnet. Mit "x" ist normalerweise die Zeitachse bezeichnet. Im vorliegenden Fall kann hiermit jedoch die Höhe des Filterdorns bezeichnet werden, da die Höhe des Filterdorns der Verweilzeit des Preßgutes in der Preßzone proportional ist. Hierbei wird die Austragsposition gleich Null gesetzt. Hierdurch wird b = 25,67, da ja $a^o = 1$ ist und 25,67 + 1 = 26,7 ist (26,7 % Endvolumen).

In einer Annahme soll davon ausgegangen werden, daß Ausgangsbasis 40% Trockenstoff ist bei einer "Kegellänge" von 16 dm. Dann ergibt sich für a: a =
Gemäß der Kurve aus der Funktion $Q_x = a^x + b$ (Fig.27) vermindert sich nun das Volumen bis zum Endvolumen von 26,7 % des Ausgangsvolumens von 100 % und einer Zwischensituation im zylindrischen Führungsrohr von 50% Volumen. Da also das Volumen sich im zylindrischen Führungsrohr 3 um die Hälfte vermindert hat, ist auch der Hub des Preßkolbens 1 nur zur Hälfte genutzt. Der Resthub ist gleichzeitig die Hubhöhe, mit dem der Filterkuchen an der Austragsöffnung ausgetragen wird. Dividiert man die Höhe des kegeligen Filterdorns durch die Hubhöhe des Preßkolbens, so erhält man die Taktzahl. Im vorliegenden Beispiel ist die Taktzahl 6 1/3. Somit beträgt die Verweilzeit des Preßgutes in der Presse 6 1/3 mal Taktzeit. Die Taktzeit wiederum setzt sich zusammen aus der Totzeit und der Preßzeit.

Totzeiten entstehen durch:
Filtermantel anheben und Preßfilter damit öffnen
Filterkuchen ausstoßen

Rückhub des Preßkolbens und
Füllen des zylindrischen Führungsrohres
Kolben einfahren

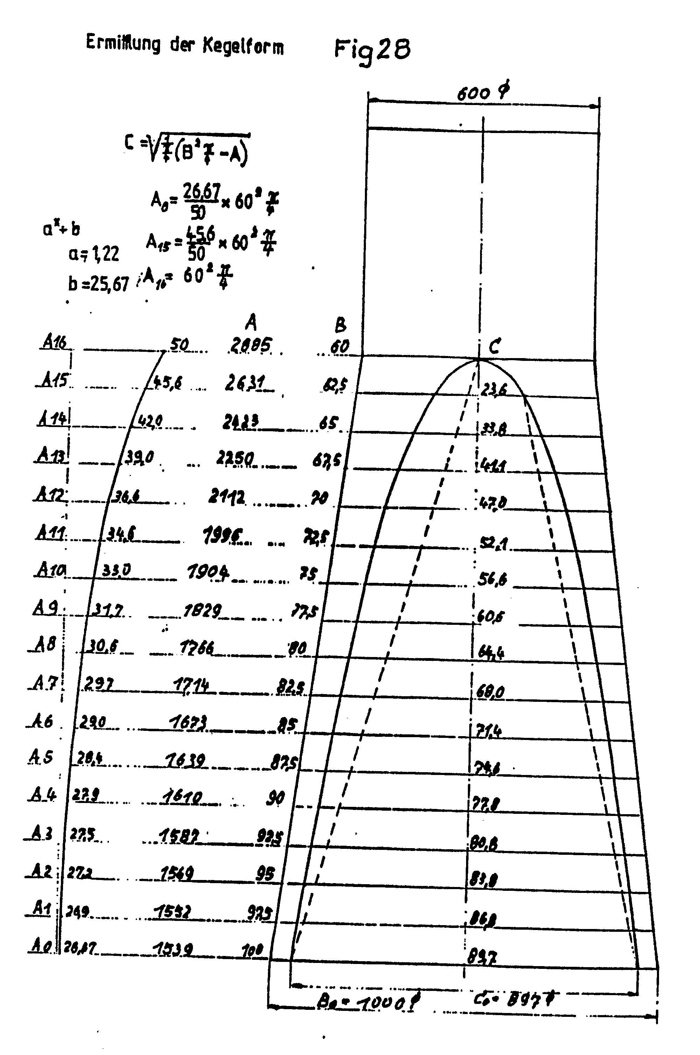

Das Schließen des Filtermantels erfordert keine gesonderte Zeit, weil dies gleichzeitig mit einer anderen Bewegung geschehen kann. Die Totzeit sollte 10 bis 15 Sekunden nicht überschreiten. Die Preßzeit liegt zwischen 30 und 60 Sekunden, so daß die Taktzeit 40 bis 75 Sekunden beträgt. Aus der Filtratablaufkurve für den konischen Preßteil nach Fig. 27 ergibt sich die erforderliche geometrische Form des kegeligen Filterdorns nach Fig. 28. Hierbei wird die Ringfläche A zwischen dem Innen- und Außenkegel von A 16 bis A 0 gemäß der Kurve $a^x + b$ verringert.
Selbst wenn die Verringerung der Ringfläche einen linearen Verlauf hätte, erkennt man aus den in Fig. 28 angegebenen mathematischen Beziehungen, daß das Profil des Filterdorns einen parabolischen Verlauf haben muß. Wollte man dem Filterdorn einen linearen Verlauf in Form eines Kegels geben, so wäre ein abgestumpfter Kegel mit abgerundeter Spitze eine bessere Anpassung als ein spitzer Kegel, wie ebenfalls der Fig. 28 entnommen werden kann. Ein solcher Kegel ist in Fig. 28 dargestellt und es ist die äußere Mantelfläche des Filtermantels der Querschnittsflächenverringerung angepaßt. Hierbei zeigt die genannte Mantelfläche eine Mantellinie mit eingezogener Form, die sehr leicht durch eine flexible Preßmembran erzeugt werden kann. Daher ist beim Einsatz einer Preßmembran, die sich dem Entwässerungsverhalten des Preßgutes anpassen kann, die Ermittlung der mathematischen Form der jeweiligen Entwässerungskurve nicht mehr erforderlich.

Das erfindungsgemäße Preßfilter eignet sich besonders für ein Nachpressen bereits entwässerter Schlämme und ein Auspressen von Schüttgütern aller Art. Die vorentwässerten Schlämme können vorteilhafterweise nochmals behandelt werden, um sie für eine weitergehende Entwässerung geeigneter zu machen. Dies kann beispielsweise dadurch geschehen, daß man die vorentwässerten Schlämme über eine Schüttelrinne führt, wodurch die tixotrope Eigenschaft des jeweiligen Produktes genutzt werden kann. In der Schüttelrinne verhalten sich durch die Durchschüttelung aufgrund der tixotropen Eigenschaften diese Stoffe wieder weitestgehend wie Flüssigkeiten. Hier seien besonders erwähnt Farbstoffe und Pigmente.
Andere Stoffe wiederum lassen sich in ihrem Entwässerungsverhalten beeinflussen durch eine chemische oder polyelektrolytische Konditionierung, d.h. durch chemisches Binden der Feststoffe aneinander und durch ein entsprechendes Freisetzen der Flüssigkeiten oder durch das Erzeugen elektrischer Ladungsfelder bei der elektrolytischen Konditionierung, die ebenfalls das Binden der Feststoffe aneinander bewirkt und das Freisetzen der Flüssigkeiten. Dies kann erfolgen als Nachkonditionierung bei bereits bei der ersten Filtration erfolgten Konditionierung, aber auch als Konditionierungsvorgang bei normal vorentwässerten Schlämmen. Weiterhin können sogen. Filterhilfsmittel zugegeben werden, durch die eine wesentlich verbesserte Feuchtigkeitsabscheidung erreicht wird. Solche Filterhilfsmittel schaffen innerhalb des Preßgutes ein Dränagesystem, in deren Ebenen die Feuchtigkeit abfließen kann. Solche Filterhilfsmittel können z.B. sein Perlite, Bleicherden, Glaspulver, Kohlenpräparate, Zellstoff-Fasern, Holzschliff, verschiedene Aschen und Stäube usw. Für eine Nachentwässerung derartig mit Filterhilfsmittel ergänzter Produkte eignet sich das erfindungsgemäße Preßfilter ganz besonders. Zunächst wird ja das Preßgut durch den Preßkolben 1 von oben nach unten gepreßt und daher zu waagerechten Linsen mit den dazwischen liegenden Dränageschichten gepreßt. Kommt nun das Preßgut zwischen den inneren und äußeren Kegel, so kann das Preßgut zusätzlich durch die Preßmembranen 24 von den Seiten her verpreßt werden. Dadurch bilden sich neue Dränageebenen. Durch das ablaufende Preßfiltrat wird das relative Volumen an Dränagematerial von Stufe zu Stufe größer, wodurch die weitere Entwässerung unterstützt wird. So lassen sich nach dieser Methode auch besonders vorteilhaft z.B. Rübenschnitzel entwässern.

Der bisher beschriebene Preßfilter ist im wesentlichen vorgesehen für das Nachpressen bereits vorgefilterter Suspensionen bzw. für das Abpressen von Schüttgütern. Das Preßgut wurde dazu in einen Fülltrichter eingegeben und beim Rückhub des Preßkolbens in den Preßzylinder eingefüllt.

Eine weitere Möglichkeit besteht jedoch darin, den Füllbehälter so auszubilden, daß er die Funktion eines Vorfilters übernimmt, so daß die Vorstufe in den Filter integriert ist. Diese Maschinenkombination eignet sich in ganz besonderer Weise für die Filtration von Abwässerschlämmen. In der Regel werden Abwässerschlämme vor der Filtration polyelektrolytisch konditioniert. Dadurch werden die Feststoffe aneinander gebunden und das umgebende Wasser freigesetzt. Dieses freigesetzte Wasser läßt sich durch natürliche Schwerkraftfiltration über sogenannte Seihfilter in sehr kurzer Zeit abziehen. Es hat sich dabei herausgestellt, daß durch leichte Rührvorgänge, insbesondere unmittelbar über der Seihfläche, die Entwässerung noch weiter gesteigert werden kann. Es ist daher möglich, Abwässerschlämme, die in der Regel mit einem Feststoffgehalt von 3% - 5% TS anfallen, durch einen Seihvorgang auf 14% - 16% TS zu entwässern, d.h. es wird hier 70% - 80% des vorhandenen Wassers abgeschieden.

Eine Ausführungsform eines solchen Vorfilters ist in Fig. 6b im Schnitt und in Fig. 6c in der Draufsicht dargestellt.

Wie in Fig. 6a ist in Fig. 6b erkennbar der Preßkolben 1, der mit Filtermittel 2 belegt ist, das zylindrische Führungsrohr 3, die Kolbenstange 4' des Preßfilters, der Füllbehälter 5" mit dem konischen Boden 6, die Rührblätter 27, der Antriebsmotor 28, das Halslager 29 und das Abflußrohr 30. Bei der Darstellung nach Fig. 6b dreht sich der Rührer mit den Rührblättern 27 und der Füllbehälter 5" mit dem konischen Boden 6 relativ zueinander. Außerdem ist der Füllbehälter und der konische Boden mit einem Filtermittel bzw. mit einem Filtersieb ausgestattet. Zusätzlich kann auch das Innenrohr 138 mit Filtermittel bzw. Filtersieb 137' ausgestattet sein.

Die konstruktive Ausführung ist dergestalt, daß der Antriebsmotor 28 sowohl den Rührer als auch den Füllbehälter 5" antreibt. Als Übertragungsmittel sind bevorzugt Zahnriemen 139 und 140 verwendet. Der Zahnriemen 139 treibt den Rührer direkt an, der Zahnriemen 140 treibt zwei bevorzugt gummierte Reibrollen 141 an. Im Ausführungsbeispiel nach Fig. 6b liegen die Reibrollen 141 innen, so daß Rührer und Füllbehälter gleiche Drehrichtung haben. Werden die Reibrollen außen angeordnet, ergibt sich eine gegenläufige Drehrichtung. Um eine Reibkraft auf die Reibrollen zu erzeugen, ist gegenüber den Reibrollen eine Spannrolle 142 angeordnet, die über einen Exzenter 143 in ihrer Vorspannkraft eingestellt werden kann. Der Füllbehälter 5" ist über Laufrollen 144 auf einem Laufring 145 aufgelagert. Dabei ist der Laufring Bestandteil des Rührers.

Zur Reinigung der Filterfläche bzw. der Siebfläche ist ein Rohr 146 mit Sprühdosen 147 vorgesehen, mit denen die Filterfläche dauernd oder auch zeitweilig gesäubert werden kann. Der Funktionsablauf ist wie folgt:

Die zu filtrierende Suspension läuft kontinuierlich über das Zulaufrohr 17 in den Füllbehälter 5". Über die Filterfläche bzw. Siebfläche 137 läuft das Filtrat in den feststehenden Filtratsammelbehälter 148 und über den Ablaufstutzen 149 kontinuierlich ab. Über die Filterfläche 137' am Innenrohr 138 läuft das Filtrat über Ablaufschlitze 150 im Kolben 1 in das Abflußrohr 30. Während dieses Vorganges dreht sich der Rührer im Füllbehälter 5" und begünstigt das Abtrennen des Wassers vom Feststoff. Gemäß der Mengendifferenz zwischen Zulauf und Ablauf wird der Füllbehälter 5" vorwiegend mit Feststoff gefüllt, wobei im konischen Bodenteil 6 erstens durch die längere Verweilzeit, zweitens durch die vergrößerte Filterfläche am Innenrohr und drittens durch den höheren Staudruck eine höhere Feststoffkonzentration erreicht wird. Über eine nicht dargestellte Niveaumessung wird die maximale Füllstandshöhe im Füllbehälter 5" gemessen. Aufgrund dieses Kontaktes wird der Abpreßvorgang im Preßfilter beendet, der Preßmantel 7 angehoben, der Filterkuchen ausgestoßen und der Preßmantel wieder geschlossen, wobei gleichzeitig der Preßkolben 1 angehoben wird. Erreicht der Preßkolben 1 die obere Kante des zylindrischen Führungsrohres 3, so hebt der Preßkolben 1 das Innenrohr 138 an, das über eine Feder 151 vorgespannt ist und sich über Laufrollen 152 auf der Oberseite des Preßkolbens 1 abstützt. Damit öffnet sich der Zulauf vom Füllbehälter 5″ zum zylindrischen Führungsrohr 3 und damit wird der Filterrückstand in das zylindrische Führungsrohr eingefüllt. Diese Einfüllung wird begünstigt erstens durch die schräggestellten Rührblätter und zweitens durch den Staudruck des gefüllten Behälters. Über einen Zeitschalter oder eine untere Niveaumessung wird die Einfüllung überwacht und der nächste Abpreßvorgang eingeleitet.

Liste der verwendeten Bezugszeichen

1 Preßkolben
1′ Preßkolben
1a Preßkolben
2 Filtermittel
3 zylindrisches Führungsrohr
4 Hydraulikzylinder
4′ Kolbenstange
5 Füllbehälter
5′ Füllbehälter
5″ Füllbehälter
6 konischer Boden
7 Filtermantel
8 Filtermittel
9 zylindrischer Ansatz
10 zylindrischer Sockel
11 Filterdorn
12 Filtermittel
13 Hydraulikzylinder
14 Unterjoch
15 Oberjoch
16 Zuganker
17 Zuführungsrohr
18 Pfeil
19 Pfeil
20 Pfeil
21 Austragsöffnung
22 Scherkante
23 Steg
24 Membran
25 Spitze
26 Schüttrinne
27 Rührblätter
28 Motor
29 Halslager
29′ Nabe
30 Abflußrohr
31 Kolbenstange
32 Rippen
33 Filtermittel
34 Anschlagamboß
35 Stellschraube
36 Schwenkhebel
37 Schenkelfeder
38 Säcke
39 Halter
40 Fläche
41 Flächen
42 Befestigungsflansch
43 Ankerschrauben
44 Befestigungsflansch
45 Zwischenstrebe
46 Niederdruckteil
47 Ventil
48 Vorspannventil
49 Wasserpumpe
50 Ventil
51 Falleitung
52 Preßwasserbehälter
53 entsperrbares Rückschlagventil
54 Deckel
54′ Deckel
55 Filtratabsaugleitung
56 Druckleitung
57 Druckübersetzer
58 Kolbenfläche
59 Kolbenfläche
60 Stirnfläche
61 Zwischenstück
62 Abflußöffnung
63 Druckmittelanschluß
64 zentrales Füllrohr
65 Rüttler
66 poröse Hülse
67 Tragring
68 Radialstrebe
69 Dränagekörper
70 Schläuche
71 Filtersäcke
72 Ringkanal
73 Filtratabflußöffnung
74 Winkelstück
75 Winkelstück
76 Filtratabfluß
77 Befestigungsflansch
78 Keilriemenscheibe
79 Keilriemen
80 Keilriemenscheibe
81 Pfeil
82 Querstege
83 zylindrisches Rohr
84 Querstege
85 zylindrisches Rohr
86 Einlaßöffnungen
87 Feder
88 Hülse
89 Quersteg

90 Auflagerolle
91 unbenutzt
92 Mengenteiler
93 Mehrwegeventil
94 entsperrbares Rückschlagventil
95 Mehrwegeventil
96 Leitung
97 Leitung
98 Leitung
99 Entsperrleitung
100 Entsperrleitung
101 Leitung
102 Leitung
103 Rückschlagventil
104 Hochdruckteil
105 Kolbenstange
106 Dichtung
107 Dichtung
108 Einsatz
109 Kragen
110 Querbohrung
111 Querbohrung
112 Steckrohr
113 Verschlußstopfen
114 zweiteiliger Ring
115 Drahtgewebe
116 Lochblech
117 Bügelblech
118 Hülsenschraube
119 Filtertuchhalteringe
120 Filtratablauf
121 Filtertuch
122 Filtertuch
123 Ablaufbohrung
124 Aublaufstutzen
125 Halbschale
126 Gummiring
127 Spannwulzt
128 Spannwulzt
129 Längsrillen
130 Ringkanal
131 Längskanäle
132 Querbohrungen
133 Ringkanal
134 Stahlring
135 Längensegmente
136 konischer Einschnitt
137 Filtermittel
137' Filtermittel
138 Innenrohr
139 Zahnriemen
140 Zahnriemen
141 Reibrollen
142 Spannrolle
143 Exzenter
144 Laufrollen
145 Laufring
146 Rohr

146' Innenrohr
147 Sprühdüsen
148 Filtratsammelbehälter
149 Ablaufstutzen
150 Ablaufschlitze
151 Feder
152 Laufrollen

## Ansprüche

1. Preßfilter mit einem Mantelgehäuse und darin verschiebbar angeordnetem, hydraulisch betätigbarem Preßkolben, einem inneren nicht zylindrischen Filterdorn und einem äußeren Filtermantel, wobei Mantelgehäuse, Preßkolben und Filterdorn koaxial zueinander angeordnet sind, Ablaßleitungen für das Filtrat sowie mit einer verschließbaren Öffnung für den Austrag des abgerpreßten Filterkuchens, dadurch gekennzeichnet, daß der Filterdorn (11) stationär und der Filtermantel (7) allein oder zusammen mit einem zylindrischen Führungsrohr (3) axial verschiebbar angeordnet und mit Kraftbetätigungsmitteln (13) verbunden ist, daß der Filtermantel (7) sich in Richtung des Preßkolbens (1,1a,1') kegelig verjüngend ausgebildet ist, wobei einerseits der Preßkolben (1,1a,1') in Preßstellung das Filter schließt und von zugeordneten Kraftbetätigungsmitteln (4) so weit axial zurückgezogen werden kann, daß die Eingangsöffnung des zylindrischen Führungsrohres (3) offen ist und wobei andererseits die Basis des kegeligen Filtermantels (7) das Filter an der Basis des Filterdorns (11) durch Axialverschiebung des Filtermantels (7) verschließen und öffnen kann und daß Filterdorn und/oder Filtermantel auf den einander zugewandten Seiten mit dauerhaftem oder leicht auswechselbarem Filtermittel belegt sind, wobei die jeweilige Ablaßleitung (18,19,20) für das Filtrat auf der Rückseite des Filtermittels (8,12) mündet.

2. Preßfilter nach Anspruch 1, dadurch gekennzeichnet, daß der Filterdorn (11) im Längsschnitt das Profil einer Parabel aufweist, zur Anpassung an das Filtrationsverhalten des zu behandelnden Stoffes.

3. Preßfilter nach Anspruch 1, dadurch gekennzeichnet, daß der Filterdorn (11) im Längsschnitt das Profil eines Kegels aufweist.

4. Preßfilter nach Anspruch 1, dadurch gekennzeichnet, daß der Filterdorn (11) im Längsschnitt das Profil eines Kegelstumpfes mit angerundeter Stumpfspitze aufweist.

5. Preßfilter nach einem der Ansprüche 1 bis 4, dadurch gekennzeichnet, daß auf der Rückseite des Filtermittels (8,12) des Filtermantels (7) und/oder des Filterdorns (11) eine Preßmembran (24) vorgesehen ist, deren Rückseite über einen Druckmittelanschluß (63) mit Druckmittel beaufschlagbar ist

6. Preßfilter nach einem der Ansprüche 1 und 3 bis 5, dadurch gekennzeichnet, daß der Filtermantel und damit das Filtermittel einen zum Filterdorn hin gekrümmten parabolischen Verlauf (Bild 4) aufweist, zur Anpassung an das Filtrationsverhalten des zu behandelnden Stoffes.

7. Preßfilter nach einem der Ansprüche 1 und 3 bis 5, dadurch gekennzeichnet, daß der Filtermantel (7) im wesentlichen glatt konisch ist und die Preßmembran (24) so bemessen ist, daß sie und damit das Filtermittel (8) nach Druckbeaufschlagung mit einem Druckmedium einen zum Filterdorn (11) hin gekrümmten parabolischen Verlauf aufweist zur Anpassung an das Filtrationsverhalten des zu behandelnden Stoffes.

8. Preßfilter nach einem der Ansprüche 1 bis 7, dadurch gekennzeichnet, daß sich an das Führungsrohr (3) auf der dem Filtermantel (7) abgewandten Seite ein Füllbehälter (5) anschließet.

9. Preßfilter nach einem der Ansprüche 1 bis 8, dadurch gekennzeichnet, daß der Übergang von der lichten Weite des Füllbehälters (5) zur lichten Weite des Führungsrohres (3) als konischer Boden (6) ausgebildet ist.

10. Preßfilter nach einem der Ansprüche 1 bis 9 dadurch gekennzeichnet, daß in dem Füllbehälter (5) ein Rührwerk (27,28,29,29′) angeordnet ist.

11. Preßfilter nach Anspruch 10, dadurch gekennzeichnet, daß das Rührwerk drehantreibbar gelagerte Rührblätter (27) aufweist.

12. Preßfilter nach Anspruch 11, dadurch gekennzeichnet, daß die Rührblätter (27) an einer Nabe (29′) eines Halslagers (29) befestigt sind, das seinerseits an einem Deckel (54) des Füllbehälters angeordnet ist, wobei die Nabe (29′) mit einem Antriebsmotor (28) drehantreibbar verbunden ist.

13. Preßfilter nach Anspruch 12, dadurch gekennzeichnet, daß die Kolbenstange (4′) des Hydraulikzylinders (4) konzentrisch durch das Halslager (29) hindurchgeführt ist.

14. Preßfilter nach einem der Ansprüche 1 bis 13, dadurch gekennzeichnet, daß der Füllbehälter (5′, 5″) drehantreibbar gelagert ist.

15. Preßfilter nach Anspruch 14, dadurch gekennzeichnet, daß der Füllbehälter (5′) ein vom Preßkolben (1′) im Rückhub verschiebbares, zentrales Füllrohr (64) aufweist.

16. Preßfilter nach einem der Ansprüche 1 bis 15, dadurch gekennzeichnet, daß der Füllbehälter (5,5′) direkt oder über einen Deckel (54′) mit einem Rüttler (63) oder Klopfer verbunden ist.

17. Preßfilter nach einem der Ansprüche 1 bis 16, dadurch gekennzeichnet, daß der Filterdorn (11) an seiner Basis einen zylindrischen Sockel (10) aufweist, der mit einem entsprechend dimensionierten zylindrischen Ansatz (9) an der Basis des Filtermantels (7) zum Öffnen und Schließen des Zylinders zusammenwirkt.

18. Preßfilter nach Anspruch 17, dadurch gekennzeichnet, daß der zylindrische Ansatz (9) nach außen eine ringförmig verlaufende Scherkante (22) aufweist zum Abtrennen des ausgeschobenen Filterkuchens.

19. Preßfilter nach einem der Ansprüche 1 bis 18, dadurch gekennzeichnet, daß der Preßkolben (1) auf seiner inneren Stirnseite mit Filtermittel (2) belegt und auf der Filtratseite mit einer unter Unterdruck setzbaren Filtratabsaugleitung (39) verbunden ist.

20. Preßfilter nach Anspruch 19, dadurch gekennzeichnet, daß die innere, mit Filtermittel (2) belegte Stirnseite des Preßkolbens (1a) stumpfkegelig geformt ist mit einer in das Innere des Filters zeigenden Kegelspitze (Fig. 6).

21. Preßfilter nach Anspruch 20, dadurch gekennzeichnet, daß die Kegelspitze mit einem Abflußrohr (30) verbunden ist, das dichtend und verschiebbar in die Spitze (25) des Filterdorns (11) einggeführt ist.

22. Preßfilter nach einem der Ansprüche 1 bis 21, dadurch gekennzeichnet, daß im inneren Preßspalt zwischen den sich gegenüberliegenden Oberflächen von Filtermantel (7) und Filterdorn (11) radial gerichtete Rippen (32) zur Auftrennung des Filterkuchens angeordnet sind.

23. Preßfilter nach Anspruch 22, dadurch gekennzeichnet, daß die Rippen (32) in Umfangsrichtung gleichmäßig verteilt angeordnet sind.

24. Preßfilter nach einem der Ansprüche 22 und 23, dadurch gekennzeichnet, daß Rippen (32) am Filterdorn (11) befestigt sind.

25. Preßfilter nach einem der Ansprüche 2 bis 24, dadurch gekennzeichnet, daß die Rippen (32) mit Filtermittel (33) belegt sind.

26. Preßfilter nach einem der Ansprüche 22 bis 25, dadurch gekennzeichnet, daß die Trennrippen (32) doppelwandig und elastisch ausgebildet und von innen mit Druckmedium beaufschlagbar sind.

27. Preßfilter nach einem der Ansprüche 22 bis 26, dadurch gekennzeichnet, daß der Randbogen der Rippen (32) von einer Schenkelfeder (37) gebildet wird, die jeweils mittels eines Halters (39) an der Spitze (25) des Filterdorns (11) befestigt ist.

28. Preßfilter nach einem der Ansprüche 1 bis 27, dadurch gekennzeichnet, daß in einem axialen Abstand von der Scherkante (22) ein kreisringförmiger Anschlagamboß (34) zur Abstützung des ausgetragenen Filterkuchens vorgesehen ist

29. Preßfiltern nach Anspruch 28, dadurch gekennzeichnet, daß der Anschlagamboß (34) aus Ringsegmenten zusammengesetzt ist.

30. Preßfilter nach Anspruch 28 oder 29, dadurch gekennzeichnet, daß der Anschlagamboß bzw. die Ringsegmente axial verstellbar ausgebildet sind.

31. Preßfilter nach Anspruch 29 oder 30, dadurch gekennzeichnet, daß die Ringesegmente auf einem mit einem Antrieb verbundenen oder verbindbaren Schwenkhebel (36) angeordnet sind.

32. Preßfilter nach einem der Ansprüche 1 bis 31, dadurch gekennzeichnet, daß das zylindrische Führungsrohr (3) auf der Innenseite eine für eine Filtration geeignete poröse Hülse (66) aufweist, deren Filtratseite mit einem Filtratabfluß verbindbar ist.

33. Preßfilter nach einem der Ansprüche 1 bis 32, dadurch gekennzeichnet, daß das Führungsrohr (3) ortsfest angeordnet ist, während der Filtermantel (7) am Führungsrohr (3) verschiebbar angeordnet ist.

34. Preßfilter nach einem der Ansprüche 1 bis 33, dadurch gekennzeichnet, daß die Rückseite der Preßmembran (24) über eine Druckleitung (56) mit dem Niederdruckteil (46) eines Druckübersetzers (57) verbunden ist, wobei die beiden Kolbenflächen (58,59) der Kolben des Druckübersetzers (57) im gleichen Verhältnis zueinander stehen, wie die Fläche (40) des Kolbens des Hydraulikzylinders (4) und die Fläche (60) der Stirnseite des Preßkolbens (1) und wobei Kolbenfläche (38) und die Fläche (40) mit gleichem Druck beaufschlagbar sind.

35. Preßfilter nach einem der Ansprüche 1 bis 34, dadurch gekennzeichnet, daß ein Tragring (67) unterhalb des zylindrischen Führungsrohrs (3) in den Innenraum des Filters eingesetzt und mittels Radialstreben (68) an der Spitze des Filterkegels (11) befestigt ist, wobei am Tragring (67) außer Rippen (32) stabartig langgestreckte, elastische Drainagekörper (69) angeordnet sind, die sich vom Tragring (67) bis etwa zur Basis des Filterkegels (11) erstrecken.

36. Preßfilter nach Anspruch 33, dadurch gekennzeichnet, daß Tragring (67) und Radialstrebe (68) als Rohrleitung und die Drainagekörper (69) als elastische und an ihrem freien Ende verschlossene Schläuche (70) ausgebildet sind, wobei die Rohrleitungen und die Schläuche (70) untereinander verbunden sind und durch den Filterkegel (11) hindurch mit Druckmittel beaufschlagbar sind.

37. Preßfilter nach Anspruch 36, dadurch gekennzeichnet, daß die Schläuche (70) von Filtersäcken (71) umgeben sind, die im Bereich ihres oberen Endes mit einem den Tragring (67) umgebenden Ringkanal (72) verbunden sind, der seinerseits mindestens eine Filtratabflußöffnung (73) im Bereich der Rippe (32) aufweist.

38. Preßfilter nach einem der Ansprüche 1 bis 37, dadurch gekennzeichnet, daß unterhalb des zylindrischen Führungsrohres (3) in etwa gleichen Abständen mehrere Filtertuchhalteringe (119) eingesetzt sind, die auf den Rippen (32) aufliegen, wobei diese Filtertuchhalteringe einen Filtratablauf (120) besitzen, der in die Rippen (32) einmündet und als Ringsegmente ausgebildet sein können, die zusammengefügt einen zur Filtermitte konzentrischen Ring bilden.

39. Preßfilter nach einem der Ansprüche 1 bis 38, dadurch gekennzeichnet, daß die Filtertuchhalteringe (119) mit Filtertüchern (121, 122) belegt sind, die annähernd bis zur Austragsöffnung in den Innenraum des Filters einmünden.

40. Preßfilter nach einem der Ansprüche 38 und 39, dadurch gekennzeichnet, daß die Filtertücher aus einem beidseitigen, äußeren, glatten Filtertuch (121) und einem mindestens einlagigen, bevorzugt zweilagigen Dränagetuch (122) bestehen, daß das Dränagetuch (122) in das Filtertuch 121) eingenäht ist, wobei das Filtertuch mit dem Dränagetuch (122) im oberen Teil eine Schlaufe bildet, in die ein Filtertuchhaltering (119) eingeschoben ist.

41. Preßfilter nach Anspruch 40, dadurch gekennzeichnet, daß die Abwicklung des Filtertuches in der Grundform einem Segment eines Kegelmantels entspricht, daß diese Mantelfläche an der Längsseite so ausgebildet ist, daß sie nach unten etwas verjüngt ist und daß in dem Filtertuch mindestens ein von oben nach unten sich verjüngender Einschnitt ist (Figur 24).

42. Preßfilter nach einem der Ansprüche 1 bis 41, dadurch gekennzeichnet, daß das gesamte Preßfilter lotrecht angeordnet ist mit dem zylindrischen Sockel (10) nach unten.

43. Preßfilter nach Anspruch 14, dadurch gekennzeichnet, daß der Füllbehälter (5″) auf der Innenseite seiner Außenwand mit einem Filtermittel oder Filtersieb (137) belegt ist, wobei die Außenwand geeignete Durchbrüche für den Ablauf des Filtrats aufweist.

44. Preßfilter nach Anspruch 43, dadurch gekennzeichnet, daß der Füllbehälter (5″) von einem Filtratsammelbehälter (148) umschlossen ist.

45. Preßfilter nach Anspruch 44, dadurch gekennzeichnet, daß in dem Filtratsammelbehälter (148) ein Sprührohr (146) mit Sprühdüsen (147) angeordnet ist zur Reinigung der Außenwand und des Filtermittels bzw. Filtersiebes (137) des Füllbehälters (5″).

46. Preßfilter nach einem der Ansprüche 43 bis 45, dadurch gekennzeichnet, daß das Innenrohr (138) auf seiner Außenseite mit Filtermittel oder Filtersieb (137′) belegt ist, wobei die Wand des Innenrohres (138) geeignete Durchbrüche für den Ablauf des Filtrats aufweist.

Fig. 1

EP 0 392 340 A2

Fig. 2

Fig.3

Fig. 4

Fig. 5

Fig 5a

Fig. 6

Fig 6a

Fig 6b

Fig 6c

32

33

12

11

Fig. 7

32

33

Fig. 8

Fig 9

Fig. 10

EP 0 392 340 A2

Fig. 11

Fig 12

Fig.12a

Fig 13

EP 0 392 340 A2

Fig 14

Fig 15

Fig 16

Fig 17

Fig 18

Fig 19

F. Fig 20

Fig 21

Fig 22

Fig 23

121

136

Fig 24

Fig 25

Fig 26

Gruppe.1  Gruppe 2

100%  85%  3%  7%  65%

Säule I

Säule II

100%  73,83%  20%  61,63%

Säule III

25%  75%  100%

Säule IV

Feststoff    Filtrat    Restfeuchte

# Fig 27

Fig 27

$$Q_x = a^x + b \; ; \qquad b = 25,67$$
$$a = \sqrt[16]{50 - 25,67}$$
$$a = 1,22$$

Verhältnis 50 : 26,67 = 1,875 : 1

EP 0 392 340 A2

Ermittlung der Kegelform  Fig 28

$$C = \sqrt{\tfrac{4}{\pi}\left(B^2 \tfrac{\pi}{4} - A\right)}$$

$$A_0 = \frac{26{,}67}{50} \times 60^2 \tfrac{\pi}{4}$$

$a^x + b$

$a = 1{,}22$  $\quad A_{15} = \frac{45{,}6}{50} \times 60^2 \tfrac{\pi}{4}$

$b = 25{,}67$  $\quad A_{16} = 60^2 \tfrac{\pi}{4}$

|      |      | A     | B    | C    |
|------|------|-------|------|------|
| A16  | 50   | 2885  | 60   |      |
| A15  | 45,6 | 2631  | 62,5 | 23,6 |
| A14  | 42,0 | 2423  | 65   | 33,8 |
| A13  | 39,0 | 2250  | 67,5 | 41,1 |
| A12  | 36,6 | 2112  | 70   | 47,0 |
| A11  | 34,6 | 1996  | 72,5 | 52,1 |
| A10  | 33,0 | 1904  | 75   | 56,6 |
| A9   | 31,7 | 1829  | 77,5 | 60,6 |
| A8   | 30,6 | 1766  | 80   | 64,4 |
| A7   | 29,7 | 1714  | 82,5 | 68,0 |
| A6   | 29,0 | 1673  | 85   | 71,4 |
| A5   | 28,4 | 1639  | 87,5 | 74,6 |
| A4   | 27,9 | 1610  | 90   | 77,8 |
| A3   | 27,5 | 1587  | 92,5 | 80,6 |
| A2   | 27,2 | 1569  | 95   | 83,8 |
| A1   | 24,9 | 1532  | 97,5 | 86,8 |
| A0   | 26,67| 1539  | 100  | 89,7 |

600 ⌀

$B_0 = 1000\ ?$  $\quad C_0 = 897\ ?$

Ermittlung der Mantelform
Fig 29

$$B=\sqrt{\frac{1}{9/4}\left(C^2\frac{\pi}{4}+A\right)}$$

| | | | | |
|---|---|---|---|---|
| A16 | 50 | 2885 | 60 | |
| A15 | 45,6 | 2631 | 62,1 | 22,5 |
| A14 | 42,0 | 2423 | 61,8 | 22,0 |
| A13 | 39,0 | 2250 | 62,1 | 31,5 |
| A12 | 36,6 | 2121 | 63,2 | 36,0 |
| A11 | 34,6 | 1996 | 64,7 | 40,5 |
| A10 | 33,0 | 1904 | 66,0 | 45,0 |
| A9 | 31,7 | 1829 | 68,1 | 49,5 |
| A8 | 30,6 | 1766 | 72,9 | 54,0 |
| A7 | 29,7 | 1714 | 74,9 | 58,5 |
| A6 | 29,0 | 1673 | 78,1 | 63,0 |
| A5 | 28,4 | 1639 | 81,5 | 67,5 |
| A4 | 27,9 | 1610 | 85,1 | 72,0 |
| A3 | 27,5 | 1587 | 88,2 | 76,5 |
| A2 | 27,2 | 1569 | 92,6 | 81,0 |
| A1 | 26,9 | 1552 | 96,4 | 85,5 |
| A0 | 26,67 | 1539 | 100,2 | 90,0 |

600 ⌀

C = 900 ⌀

B = 1000 ⌀